(19) Europäisches Patentamt
European Patent Office
Office européen des brevets

(11) EP 2 372 386 B1

(12) **EUROPEAN PATENT SPECIFICATION**

(45) Date of publication and mention
of the grant of the patent:
**23.07.2014 Bulletin 2014/30**

(51) Int Cl.:
***G01S 5/10*** *(2006.01)*    ***G01S 5/02*** *(2010.01)*
***G01S 5/14*** *(2006.01)*

(21) Application number: **10003095.6**

(22) Date of filing: **24.03.2010**

(54) **Method for distance estimation**

Verfahren zur Abstandsschätzung

Procédé d'évaluation de distance

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**05.10.2011 Bulletin 2011/40**

(73) Proprietor: **Li, Xiaoyun**
**Futian District**
**Shenzhen**
**518048 (CN)**

(72) Inventor: **Li, Xiaoyun**
**Futian District**
**Shenzhen**
**518048 (CN)**

(74) Representative: **Hofmann, Andreas et al**
**Richter Werdermann Gerbaulet Hofmann**
**Patentanwälte**
**Postfach 33 02 11**
**80062 München (DE)**

(56) References cited:
**EP-A2- 1 014 103    GB-A- 2 359 699**

• **JULIUS O. SMITH, JONATHAN S. ABEL: "Closed-Form Least-Squares Source Location Estimation from Range-Difference Measurements" IEEE TRANSACTIONS ON ACOUSTICS, SPEECH, AND SIGNAL PROCESSING, vol. ASSP-35, no. 12, December 1987 (1987-12), pages 1661-1669, XP007914836**
• **HO K C ET AL: "SOLUTION AND PERFORMANCE ANALYSIS OF GEOLOCATION BY TDOA" IEEE TRANSACTIONS ON AEROSPACE AND ELECTRONIC SYSTEMS, IEEE SERVICE CENTER, PISCATAWAY, NJ, US LNKD- DOI: 10.1109/7.259534, vol. 29, no. 4, 1 October 1993 (1993-10-01), pages 1311-1322, XP000413507 ISSN: 0018-9251**
• **FANG B T: "SIMPLE SOLUTIONS FOR HYPERBOLIC AND RELATED POSITION FIXES" IEEE TRANSACTIONS ON AEROSPACE AND ELECTRONIC SYSTEMS, IEEE SERVICE CENTER, PISCATAWAY, NJ, US LNKD- DOI: 10.1109/7.102710, vol. 26, no. 5, 1 September 1990 (1990-09-01), pages 748-753, XP000173283 ISSN: 0018-9251**

## Description

### Field of the Invention

The present invention relates to distance estimation between a point and a few devices through wireless communication.

### Background to the invention

In wireless communication, a mobile or static receiver device can determine the differences in distance between itself and different transmitter devices through time difference of arrival or differences in travel time of received signals from different sources. If differences in distance between a point and at least four remote devices can be obtained, then the distance between the point and each of the transmitters can be derived. For example, according to Awange, J. L. and E. Grafarend, "Algebraic solution of GPS pseudo-ranging equations", Journal of GPS Solutions, 4(5), 20-32, 2002b, in Global Positioning System, a receiver device can receive wireless signals from at least four artificial satellites and calculate Pseudorange from each satellite. Then at least four linear equations can be derived within unknown variables X, Y, Z, and T, wherein (X,Y,Z) is the 3D rover position in a predefined coordinate system, and T is the time at which simultaneous measurements are made to determine the 3d position of the receiver device. Because the location of each satellite at any time T are known in advance, and Pseudorange from each satellite has been obtained, hence the real distance from each satellite can be calculated by solving four linear equations where each equation is derived according to position and Pseudorange from each satellite. And the 3D rover position (X,Y,Z) of the receiver device can also be derived consequently.

According to J. Rotman, "Galois Theory", New York: Springer-Verlag, 1990, a polynomial equation of degree five or more cannot be solved by radicals in general. Also when the number of unknown variables is large, even if an analytical solution exists for linear equations, the analytical solution could be too complex to be derived. Therefore, in conventional ways, the Gauss-Newton least-squares method is used to estimate distances between a receiver and at least four transmitter devices according to Pseudorange or differences in distance between the receiver device and transmitter devices, when the location of each transmitter device or distances between these transmitter devices are known in advance.

A method according to the preamble of claim 1 is disclosed in Julius O. Smith, Jonathan S. Abel, "Closed-Form Least-Squares Source Location Estimation from Range-Difference Measurements", IEEE Transactions on Acoustics, Speech, and Signal Processing, vol. ASSP-35, no. 12, December 1987, pages 1661 to 1669.

Regarding the pertinent prior art, further reference can be made

- to EP 1014 103 A2,
- to K. C. Ho, Y. T. Chan, "Solution and Performance Analysis of Geolocation by TDOA", IEEE Transactions on Aerospace and Electronic Systems, vol. 29, no. 4, 1 October 1993, pages 1311 to 1322, as well as
- to B. T. Fang, "Simple solutions for hyperbolic and related position fixes", IEEE Transactions on Aerospace and Electronic Systems, vol. 26, no. 5, 1 September 1990, pages 748 to 753.

### Statement of invention

The present invention provides an analytical solution to estimate the distance between a point and at least one device based on Pseudorange measurements or differences in distance between the point and at least four devices. Although such an analytical solution is too complex to be derived in nature due to large number of unknown variables, but the invention simplifies equations and trims intermediate analytical expressions according to simulation results. Hence the analytical solution for distance estimation is derivable.

The advantage of the invention is that, by choosing at least one of the analytical solutions based on the method, the distance between a point and any one of at least four devices can be estimated analytically when the location of each device or distances between these devices are known in advance. The method requires less computational time and less computational capability on the hardware compare to conventional methods such as the Gauss-Newton least-squares method.

### Brief description of the drawings

The present invention will become more understandable from the detailed description given herein below and the accompanying drawings which are given by way of illustration only, and thus are not limitative of the present invention. In the following figures,

Figure 1 shows a point O and four devices A, B, C and D, where devices A, B, C and D define a tetrahedron with {A, B, C, D} as vertices in a 3d Euclidean space. x is the intersecting point between Line(OA) and Plane(BCD), where Line(OA) is the line defined by vertices {O, A}, Plane(BCD) is the plane defined by vertices {B, C, D}.

Figures 2, 3, 4, 5 and 6 are similar to Figure 1, but the point O is located outside tetrahedron ABCD.

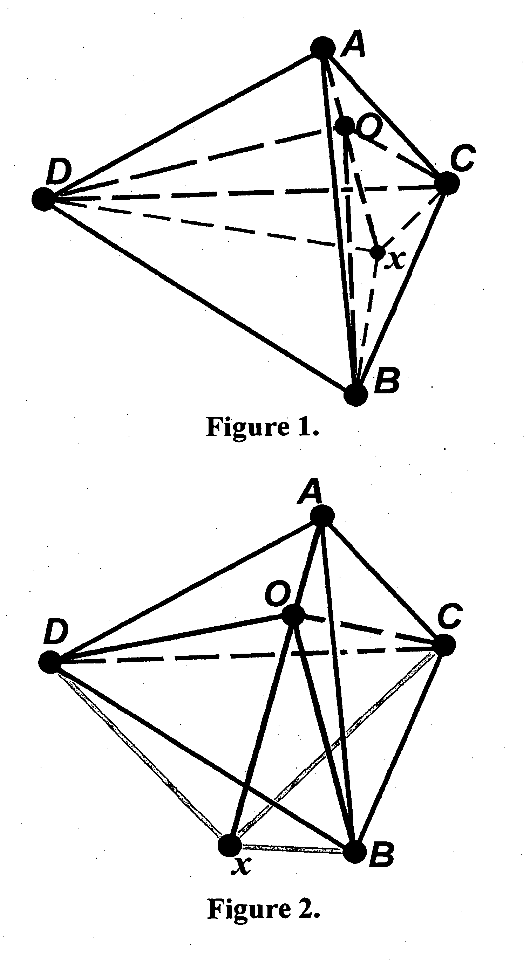

In Figures 1, 2, 3 and 4, both point O and device A are on the same side of Plane(BCD)..

Figure 2 shows, the intersecting point x is located outside triangle BCD, and point O is closer to the intersecting point x than device A.

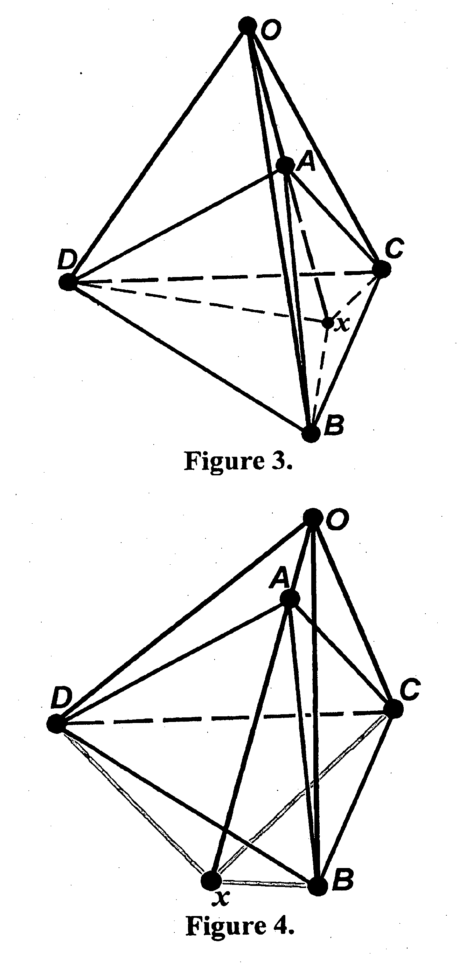

Figure 3 shows, the intersecting point x is located inside triangle BCD, and point O is further away from intersecting point x compared to device A.

Figure 4 shows, the intersecting point x is located outside triangle BCD, and point O is further away from intersecting point x compared to device A.

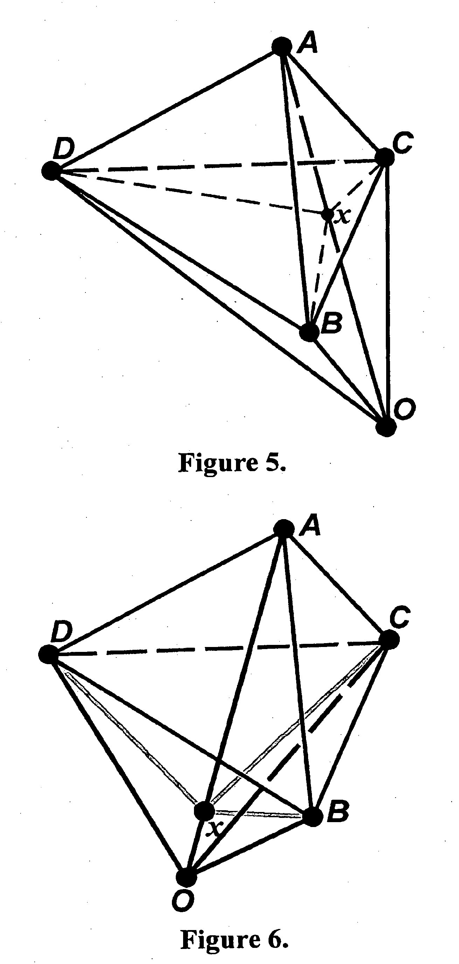

In Figures 5 and 6, device A and point O are on opposite sides of Plane(BCD)..

Figure 5 shows the intersecting point x is located inside triangle BCD.

Figure 6 shows the intersecting point x is located outside triangle BCD.

Detailed description

Referring to the drawings and initially to Figures 1 & 2, the distance between O and each device of A, B, C or D is unknown. Distances between any two devices of A, B, C and D are known in advance. Devices A, B, C and D define a tetrahedron with {A, B, C, D} as vertices in a 3d Euclidean space. x is the intersecting point between Line(OA) and Plane(BCD), where Line(OA) is the line defined by vertices {O, A}, Plane(BCD) is the plane defined by vertices {B, C, D}.

$d_{ij}$ is the pairwise distance between two vertices—i.e., the length of the edge connecting the two vertices, where the subscripts i, j $\in$ (0, 1, 2, 3, 4, 5) represent the vertices (O, A, B, C, D, x) referring to Figures 1, 2 ,3 ,4 ,5 and 6. $d_{oij}$ is the difference in distance between point O and any two devices of A, B, C and D, where $d_{oij} = d_{oi} - d_{oj}$.

The method of distance estimation performs the following steps to estimate the distance between the point O and any one of devices A, B, C and D.

Step 1: Obtain distances between any two devices of A, B, C and D, represented by $d_{l2}$, $d_{13}$, $d_{14}$, $d_{23}$, $d_{24}$, $d_{34}$ respectively.

Step 2: Obtain difference in distance from the point O and any two devices of A, B, C and D, such that when the distance between the point O and any one of the four devices A, B, C and D is known, the distance between O and each of the other three devices can also be derived.
e.g. When differences in distance $d_{012}$, $d_{013}$ and $d_{014}$ are obtained in this step, where $d_{01J} = d_{01} - d_{0j}$ for 2 >= j >= 4, then $d_{0j}$ can be derived if $d_{o1}$ is known. The differences in distance can be obtained by estimating differences in travel time from the point O and devices A, B, C and D.

Step 3: A trimmed analytical expression for $d_{05}$ or $d_{15}$ is derived as below. Preferable the Cosine law in a Euclidean space is used.

Step 4: The analytical solution for the distance between the point O and any one of devices A, B, C and D is obtained by solving a linear equation according to the relationship: $V_{oBCD}/V_{ABCD} = d_{05}/d_{15}$ as described below, where $Vo_{BCD}$ and $V_{ABCD}$ are volumes of tetrahedron OBCD and tetrahedron ABCD respectively.

Step 5: A few analytical solutions are obtained from step 4, where at least one of the analytical solutions is the estimated distance between point O and any one of devices A, B, C and D. For example, if the estimated distance between point O and device A, saying $d_{o1}$ is obtained, then the distance between point O and each device of B, C and D can also be derived according to differences in distance $d_{O1j}$ for 2 >= j >= 4.

Details about steps 3 and 4 are described as follows.

In step 3, in order to obtain the analytical expression of $d_{o5}$. The following equations are derived referring to Figures 1 and 2.

Because

$$\cos \angle AOB = -\cos \angle xOB$$

$$\cos \angle AOC = -\cos \angle xOC$$

$$\cos \angle AOD = -\cos \angle xOD$$

Preferable the Cosine law is used.

$$\cos \angle AOB = (d_{01}{}^\wedge 2 + d_{02}{}^\wedge 2 - d_{12}{}^\wedge 2) / (2 * d_{01} * d_{02})$$

$$\cos \angle xOB = (d_{05}{}^\wedge 2 + d_{02}{}^\wedge 2 - d_{25}{}^\wedge 2) / (2 * d_{05} * d_{02})$$

$$\cos \angle AOC = (d_{01}{}^\wedge 2 + d_{03}{}^\wedge 2 - d_{13}{}^\wedge 2) / (2 * d_{01} * d_{03})$$

$$\cos \angle xOC = (d_{05}{}^\wedge 2 + d_{03}{}^\wedge 2 - d_{35}{}^\wedge 2) / (2 * d_{05} * d_{03})$$

$$\cos \angle AOD = (d_{01}{}^\wedge 2 + d_{04}{}^\wedge 2 - d_{14}{}^\wedge 2) / (2 * d_{01} * d_{04})$$

$$\cos \angle xOD = (d_{05}{}^\wedge 2 + d_{04}{}^\wedge 2 - d_{45}{}^\wedge 2) / (2 * d_{05} * d_{04})$$

Where a^b means a powered by order b, and* means multiply above and throughout the description.
Hence :

$$(d_{01}{}^\wedge 2 + d_{02}{}^\wedge 2 - d_{12}{}^\wedge 2) / (2 * d_{01} * d_{02}) = -(d_{05}{}^\wedge 2 + d_{02}{}^\wedge 2 - d_{25}{}^\wedge 2) / (2 * d_{05} * d_{02})$$

$$(d_{01}{}^\wedge 2 + d_{03}{}^\wedge 2 - d_{13}{}^\wedge 2) / (2 * d_{01} * d_{03}) = -(d_{05}{}^\wedge 2 + d_{03}{}^\wedge 2 - d_{35}{}^\wedge 2) / (2 * d_{05} * d_{03})$$

$$(d_{01}{}^\wedge 2 + d_{04}{}^\wedge 2 - d_{14}{}^\wedge 2) / (2 * d_{01} * d_{04}) = -(d_{05}{}^\wedge 2 + d_{04}{}^\wedge 2 - d_{45}{}^\wedge 2) / (2 * d_{05} * d_{04})$$

Hence

$$d_{25}{}^\wedge 2 = d_{05}{}^\wedge 2 + d_{02}{}^\wedge 2 + (d_{01}{}^\wedge 2 + d_{02}{}^\wedge 2 - d_{12}{}^\wedge 2) * d_{05} / d_{01} \qquad (1)$$

$$d_{35}{}^\wedge 2 = d_{05}{}^\wedge 2 + d_{03}{}^\wedge 2 + (d_{01}{}^\wedge 2 + d_{03}{}^\wedge 2 - d_{13}{}^\wedge 2) * d_{05} / d_{01} \qquad (2)$$

$$d_{45}{}^\wedge 2 = d_{05}{}^\wedge 2 + d_{04}{}^\wedge 2 + (d_{01}{}^\wedge 2 + d_{04}{}^\wedge 2 - d_{14}{}^\wedge 2) * d_{05} / d_{01} \qquad (3)$$

Because

$$\cos(\angle BxC + \angle CxD) = \cos\angle BxD,$$

where

$$\cos(\angle BxC + \angle CxD) = \cos\angle BxC * \cos\angle CxD - \sin\angle BxC * \sin\angle CxD.$$

Hence

$$\cos\angle BxC * \cos\angle CxD - \sin\angle BxC * \sin\angle CxD = \cos\angle BxD \qquad (4)$$

Preferably the Cosine law is used again.

$$\cos\angle BxD = (d_{25}{}^\wedge 2 + d_{45}{}^\wedge 2 - d_{24}{}^\wedge 2)/(2*d_{25}*d_{45})$$

$$\cos\angle BxC = (d_{25}{}^\wedge 2 + d_{35}{}^\wedge 2 - d_{23}{}^\wedge 2)/(2*d_{25}*d_{35})$$

$$\cos\angle CxD = (d_{35}{}^\wedge 2 + d_{45}{}^\wedge 2 - d_{34}{}^\wedge 2)/(2*d_{35}*d_{45})$$

Hence

$$\sin\angle BxC = (1 - ((d_{25}{}^\wedge 2 + d_{35}{}^\wedge 2 - d_{23}{}^\wedge 2)/(2*d_{25}*d_{35}))^\wedge 2)^\wedge(1/2)$$

$$\sin\angle CxD = (1 - ((d_{35}{}^\wedge 2 + d_{45}{}^\wedge 2 - d_{34}{}^\wedge 2)/(2*d_{35}*d_{45}))^\wedge 2)^\wedge(1/2)$$

According to equations (4), the following equations are derived. Preferably the Cosine law is used again.

$$(d_{25}{}^\wedge 2 + d_{35}{}^\wedge 2 - d_{23}{}^\wedge 2) * (d_{35}{}^\wedge 2 + d_{45}{}^\wedge 2 - d_{34}{}^\wedge 2)/((2*d_{25}*d_{35})*(2*d_{35}*d_{45}))$$
$$- ((4*d_{25}{}^\wedge 2*d_{35}{}^\wedge 2 - (d_{25}{}^\wedge 2 + d_{35}{}^\wedge 2 - d_{23}{}^\wedge 2)^\wedge 2) * (4*d_{35}{}^\wedge 2*d_{45}{}^\wedge 2 - (d_{35}{}^\wedge 2 + d_{45}{}^\wedge 2 - d_{34}{}^\wedge 2)^\wedge 2))^\wedge(1/2)/((2*d_{25}*d_{35})*(2*d_{35}*d_{45})) = (d_{25}{}^\wedge 2 + d_{45}{}^\wedge 2 - d_{24}{}^\wedge 2)/(2*d_{25}*d_{45})$$

Hence:

$$(4*d_{25}{}^\wedge 2*d_{35}{}^\wedge 2 - (d_{25}{}^\wedge 2 + d_{35}{}^\wedge 2 - d_{23}{}^\wedge 2)^\wedge 2) * (4*d_{35}{}^\wedge 2*d_{45}{}^\wedge 2 - (d_{35}{}^\wedge 2 + d_{45}{}^\wedge 2 - d_{34}{}^\wedge 2)^\wedge 2) -$$
$$((d_{25}{}^\wedge 2 + d_{35}{}^\wedge 2 - d_{23}{}^\wedge 2) * (d_{35}{}^\wedge 2 + d_{45}{}^\wedge 2 - d_{34}{}^\wedge 2) - (d_{25}{}^\wedge 2 + d_{45}{}^\wedge 2 - d_{24}{}^\wedge 2) *2*d_{35}{}^\wedge 2)^\wedge 2 = 0$$

According to equations (1), (2) and (3), hence equation (5) is derived as follows.

$$(4*(d_{05}^2 + d_{02}^2 + (d_{01}^2 + d_{02}^2 - d_{12}^2) *d_{05} /d_{01})* (d_{05}^2 + d_{03}^2 + (d_{01}^2 + d_{03}^2 - d_{13}^2)$$

$$*d_{05} /d_{01}) - ((d_{05}^2 + d_{02}^2 + (d_{01}^2 + d_{02}^2 - d_{12}^2) *d_{05} /d_{01}) + (d_{05}^2 + d_{03}^2 + (d_{01}^2 +$$

$$d_{03}^2 - d_{13}^2) *d_{05} /d_{01}) - d_{23}^2)^2) * (4*(d_{05}^2 + d_{03}^2 + (d_{01}^2 + d_{03}^2 - d_{13}^2) *d_{05} /d_{01})*$$

$$(d_{05}^2 + d_{04}^2 + (d_{01}^2 + d_{04}^2 - d_{14}^2) *d_{05} /d_{01}) - ((d_{05}^2 + d_{03}^2 + (d_{01}^2 + d_{03}^2 - d_{13}^2)$$

$$*d_{05} /d_{01}) + (d_{05}^2 + d_{04}^2 + (d_{01}^2 + d_{04}^2 - d_{14}^2) *d_{05} /d_{01}) - d_{34}^2)^2) - (((d_{05}^2 + d_{02}^2 +$$

$$(d_{01}^2 + d_{02}^2 - d_{12}^2) *d_{05} /d_{01}) + (d_{05}^2 + d_{03}^2 + (d_{01}^2 + d_{03}^2 - d_{13}^2) *d_{05} /d_{01}) - d_{23}^2)$$

$$* ((d_{05}^2 + d_{03}^2 + (d_{01}^2 + d_{03}^2 - d_{13}^2) *d_{05} /d_{01}) + (d_{05}^2 + d_{04}^2 + (d_{01}^2 + d_{04}^2 - d_{14}^2)$$

$$*d_{05} /d_{01}) - d_{34}^2) - ((d_{05}^2 + d_{02}^2 + (d_{01}^2 + d_{02}^2 - d_{12}^2) *d_{05} /d_{01}) + (d_{05}^2 + d_{04}^2 +$$

$$(d_{01}^2 + d_{04}^2 - d_{14}^2) *d_{05} /d_{01}) - d_{24}^2) *2*(d_{05}^2 + d_{03}^2 + (d_{01}^2 + d_{03}^2 - d_{13}^2) *d_{05}$$

$$/d_{01}) )^2 = 0 \tag{5}$$

In equation (5), assuming $d_{01}$, $d_{02}$, $d_{03}$ and $d_{04}$ are known, then the analytical expression for the single unknown variable $d_{05}$ can be obtained as follows.

$$d_{05\_1} = d_{01}* (f_1 + f_0) / f_2$$

$$d_{05\_2} = d_{01}* (f_1 - f_0) / f_2$$

where $f_0$, $f_1$ and $f_2$ can be found in the appendix below.

According to simulation result within random locations of point O and devices A, B, C and D, $f_0$ is negligible, hence is omitted.

Hence $d_{05}$ is trimmed as follows.

$$d_{05trim} = d_{01}* f_1 / f_2 \tag{6}$$

In step 3, if the analytical expression of $d_{05}$ is derived referring to Figures 3, 4, 5 and 6, then

$$\cos \angle AOB = \cos \angle xOB$$

$$\cos \angle AOC = \cos \angle xOC$$

$$\cos \angle AOD = \cos \angle xOD$$

Hence

$$d_{25}^2 \;\; = d_{05}^2 + d_{02}^2 - (d_{01}^2 + d_{02}^2 - d_{12}^2) *d_{05} /d_{01} \tag{1a}$$

$$d_{35}{}^\wedge 2 = d_{05}{}^\wedge 2 + d_{03}{}^\wedge 2 - (d_{01}{}^\wedge 2 + d_{03}{}^\wedge 2 - d_{13}{}^\wedge 2) * d_{05} / d_{01} \qquad (2a)$$

$$d_{45}{}^\wedge 2 = d_{05}{}^\wedge 2 + d_{04}{}^\wedge 2 - (d_{01}{}^\wedge 2 + d_{04}{}^\wedge 2 - d_{14}{}^\wedge 2) * d_{05} / d_{01} \qquad (3a)$$

All the other derivations are the same as that referring to Figures 1 or 2 above.

And the analytical solution for $d_{05}$ is as follows.

$$d_{05\_1} = - d_{01} * (f_1 + f_0) / f_2$$

$$d_{05\_2} = - d_{01} * (f_1 - f_0) / f_2$$

Hence the trimmed analytical expression for $d_{05}$ is as follows.

$$d_{05trim} = - d_{01} * f_1/f_2 \qquad (6a)$$

In step 4, the volumes of tetrahedron ABCD and tetrahedron OBCD are as follows.

$$V_{ABCD} = 1/12 * ( 4*(d_{12}*d_{13}*d_{14})^\wedge 2 - d_{12}{}^\wedge 2*(d_{13}{}^\wedge 2+d_{14}{}^\wedge 2-d_{34}{}^\wedge 2)^\wedge 2 - d_{13}{}^\wedge 2*(d_{12}{}^\wedge 2+d_{14}{}^\wedge 2-$$
$$d_{24}{}^\wedge 2)^\wedge 2 - d_{14}{}^\wedge 2*(d_{12}{}^\wedge 2+d_{13}{}^\wedge 2-d_{23}{}^\wedge 2)^\wedge 2 + (d_{12}{}^\wedge 2+d_{13}{}^\wedge 2-d_{23}{}^\wedge 2)* (d_{12}{}^\wedge 2+d_{14}{}^\wedge 2-d_{24}{}^\wedge 2)$$
$$*(d_{13}{}^\wedge 2+d_{14}{}^\wedge 2-d_{34}{}^\wedge 2))^\wedge (1/2)$$

$$V_{OBCD} = 1/12 * ( 4*(d_{02}*d_{03}*d_{04})^\wedge 2 - d_{02}{}^\wedge 2*(d_{03}{}^\wedge 2+d_{04}{}^\wedge 2-d_{34}{}^\wedge 2)^\wedge 2 - d_{03}{}^\wedge 2*(d_{02}{}^\wedge 2+d_{04}{}^\wedge 2-$$
$$d_{24}{}^\wedge 2)^\wedge 2 - d_{04}{}^\wedge 2*(d_{02}{}^\wedge 2+d_{03}{}^\wedge 2-d_{23}{}^\wedge 2)^\wedge 2 + (d_{02}{}^\wedge 2+d_{03}{}^\wedge 2-d_{23}{}^\wedge 2)* (d_{02}{}^\wedge 2+d_{04}{}^\wedge 2-d_{24}{}^\wedge 2)$$
$$*(d_{03}{}^\wedge 2+d_{04}{}^\wedge 2-d_{34}{}^\wedge 2))^\wedge (1/2)$$

Referring to Figures 1 and 2,

$$d_{05trim} = d_{01} * f_1/f_2 \qquad (6)$$

$$V_{OBCD}/V_{ABCD} = d_{05}/d_{15} \qquad (7)$$

where $d_{15} = d_{01} + d_{05}$, and $d_{05} = d_{05}trim$.

Hence the following equation is derived according to equations (6) and (7).

$$f_1{}^\wedge 2*(V_{ABCD})^\wedge 2 - (V_{OBCD})^\wedge 2*( f_1+f_2)^\wedge 2 = 0 \qquad (8)$$

Referring to Figures 3, 4, 5 and 6, then

$$d_{05trim} = - d_{01} * f_1/f_2 \qquad\qquad (6a)$$

where

$d_{15} = d_{05} - d_{01}$ referring to Figures 3 and 4;

$d_{15} = d_{01} - d_{05}$ referring to Figures 5 and 6.

Hence the identical equation as equation (8) is derived.

A quartic equation with single unknown variable $d_{01}$ can be obtained by expanding Equation (8), where $d_{0j} = d_{01} - d_{01j}$ for $2 <= j <= 4$. Since analytical solution exists for a quartic equation in general, hence analytical solution for $d_{01}$ can be obtained by solving the quartic equation expanded from equation (8), which is the analytical solution for distance estimation between point O and device A.

Alternatively, in step 3 the analytical expression of $d_{15}$ instead of $_{do5}$ can be derived within similar way.

Referring to Figures 1, 2, 5 and 6.

$$\cos \angle OAB = \cos \angle xAB$$

$$\cos \angle OAC = \cos \angle xAC$$

$$\cos \angle OAD = \cos \angle xAD$$

Hence

$$d_{25}{}^{\wedge}2 = d_{15}{}^{\wedge}2 + d_{12}{}^{\wedge}2 - (d_{01}{}^{\wedge}2 + d_{12}{}^{\wedge}2 - d_{02}{}^{\wedge}2) * d_{15} /d_{01} \qquad\qquad (1b)$$

$$d_{35}{}^{\wedge}2 = d_{15}{}^{\wedge}2 + d_{13}{}^{\wedge}2 - (d_{01}{}^{\wedge}2 + d_{13}{}^{\wedge}2 - d_{03}{}^{\wedge}2) * d_{15} /d_{01} \qquad\qquad (2b)$$

$$d_{45}{}^{\wedge}2 = d_{15}{}^{\wedge}2 + d_{14}{}^{\wedge}2 - (d_{01}{}^{\wedge}2 + d_{14}{}^{\wedge}2 - d_{04}{}^{\wedge}2) * d_{15} /d_{01} \qquad\qquad (3b)$$

All the other derivation for $d_{15}$ is the same as that for $d_{05}$ above. And the analytical expression for $d_{l5}$ can be obtained as follows.

$$d_{15\_1} = d_{01} * (f_4 + f_3) / f_5$$

$$d_{15\_2} = d_{01} * (f_4 - f_3) / f_5$$

where

$$f_3 = f_0;$$

$$f_5 = f_2;$$

$$f_4 = f_1 + f_2.$$

According to simulation result using random locations of the point O and the four devices {A, B, C, D}, $f_3$ is negligible, hence is omitted. Hence $d_{15}$ is trimmed as follows0

$$d_{15trim} = d_{01} * f_4/f_5 = d_{01} * (1 + f_1/f_2) \qquad (6a)$$

Referring to Figures 3 and 4, then

$$\cos \angle OAB = -\cos \angle xAB$$

$$\cos \angle OAC = -\cos \angle xAC$$

$$\cos \angle OAD = -\cos \angle xAD$$

Hence

$$d_{25}{}^{\wedge}2 = d_{15}{}^{\wedge}2 + d_{12}{}^{\wedge}2 + (d_{01}{}^{\wedge}2 + d_{12}{}^{\wedge}2 - d_{02}{}^{\wedge}2) * d_{15}/d_{01} \qquad (1c)$$

$$d_{35}{}^{\wedge}2 = d_{15}{}^{\wedge}2 + d_{13}{}^{\wedge}2 + (d_{01}{}^{\wedge}2 + d_{13}{}^{\wedge}2 - d_{03}{}^{\wedge}2) * d_{15}/d_{01} \qquad (2c)$$

$$d_{45}{}^{\wedge}2 = d_{15}{}^{\wedge}2 + d_{14}{}^{\wedge}2 + (d_{01}{}^{\wedge}2 + d_{14}{}^{\wedge}2 - d_{04}{}^{\wedge}2) * d_{15}/d_{01} \qquad (3c)$$

All the other derivation for $d_{15}$ is the same as that referring to Figure 1, 2, 5 and 6 above.
And the analytical expression of $d_{15}$ is as follows.

$$d_{15\_1a} = -d_{01} * (f_4 + f_3)/f_5$$
$$d_{15\_2a} = -d_{01} * (f_4 - f_3)/f_5$$

Hence the trimmed analytical expression for $d_{15}$ is:

$$d_{15trim} = -d_{01} * f_4/f_5 = -d_{01} * (1 + f_1/f_2) \qquad (6b)$$

In step 4, referring to Figures 1, 2, 5 and 6,

$$V_{OBCD}/V_{ABCD} = d_{05}/d_{15} \qquad (7)$$

where $do_5 = d_{l5} - d_{01}$ referring to Figures 1 and 2,
or $d_{05} = d_{01} - d_{15}$ referring to Figures 5 and 6,
and $d_{15} = d_{15trim}$,
**[0055]** In step 4, referring to Figures 3 and 4,

$$V_{OBCD}/V_{ABCD} = d_{05}/d_{15} \qquad (7)$$

where $do_5 = d_{15} + d_{01}$
and $d_{15} = d_{15}trim$.

Because $f_4/f_5 = 1 + f_1/f_2$ according to equations (6a) and (6b), therefore $d_{05} = d_{01} * f_1/f_2$ or $do_5 = - d_{01} * f_1/f_2$ referring to Figures 1, 2, 3, 4, 5 and 6. Hence an identical equation as equation (8) is derived according to equation (7) and the analytical expression of $d_{15}$ referring to Figures 1, 2, 3, 4, 5 and 6. Therefore the analytical solution for $d_{01}$ is also identical as above.

```
f1 = (-d34^4 *d02^2 -d24^4 *d03^2 -d23^4 *d04^2 +d03^2 *d23^2
*d24^2 -2 *d04^4 *d23^2 +2 *d34^2 *d01^2 *d24^2 +2 *d01^2
*d23^2 *d24^2 -2 *d34^2 *d02^4 -2 *d24^2 *d03^4 +2 *d34^2
*d01^2 *d23^2 -d23^2 *d12^2 *d34^2 -d12^2 *d34^2 *d24^2 -d24^2
*d23^2 *d13^2 +d12^2 *d34^4 +d14^2 *d23^4 +d24^2 *d34^2 *d02^2
+d24^2 *d34^2 *d03^2 +d04^2 *d23^2 *d24^2 +d34^2 *d02^2 *d23^2
+d04^2 *d34^2 *d23^2 -d24^2 *d23^2 *d14^2 -d04^2 *d13^2 *d24^2
+2 *d03^2 *d13^2 *d24^2 -d23^2 *d14^2 *d02^2 -d01^2 *d24^4 -
d01^2 *d23^4 -d23^2 *d34^2 *d14^2 +d04^2 *d12^2 *d24^2 +2
*d34^2 *d02^2 *d12^2 +2 *d04^2 *d14^2 *d23^2 -d34^2 *d14^2
*d02^2 +2 *d23^2 *d04^2 *d03^2 -d03^2 *d12^2 *d24^2 +2 *d34^2
*d04^2 *d02^2 +d23^2 *d13^2 *d02^2 +d23^2 *d03^2 *d12^2 -d34^2
*d04^2 *d12^2 -d23^2 *d04^2 *d12^2 +2 *d34^2 *d03^2 *d02^2 -
d34^2 *d03^2 *d12^2 -d23^2 *d14^2 *d03^2 -2 *d34^2 *d04^2
*d03^2 -2 *d23^2 *d03^2 *d02^2 +2 *d23^2 *d04^2 *d02^2 -d34^2
*d13^2 *d02^2 -d13^2 *d02^2 *d24^2 -d23^2 *d04^2 *d13^2 +d34^2
*d04^2 *d13^2 -2 *d04^2 *d02^2 *d24^2 +2 *d03^2 *d02^2 *d24^2
+d34^2 *d14^2 *d03^2 -d14^2 *d03^2 *d24^2 +d14^2 *d02^2 *d24^2
+2 *d04^2 *d03^2 *d24^2 -d34^4 *d01^2 -d34^2 *d24^2 *d13^2
+d24^4 *d13^2);


f2 = 2 * (d34^2 *d12^4 +d14^4 *d23^2 +d04^4 *d23^2 -2 *d34^2
*d01^2 *d24^2 -2 *d01^2 *d23^2 *d24^2 +d24^2 *d13^4 +d34^2
*d02^4 +d24^2 *d03^4 -2 *d34^2 *d01^2 *d23^2 +d04^2 *d13^2
*d24^2 -d34^2 *d13^2 *d12^2 -2 *d03^2 *d13^2 *d24^2 +d23^2
*d14^2 *d02^2 -d34^2 *d14^2 *d12^2 +d01^2 *d24^4 +d01^2 *d23^4
-d04^2 *d12^2 *d24^2 -d13^2 *d12^2 *d24^2 -2 *d34^2 *d02^2
*d12^2 -2 *d04^2 *d14^2 *d23^2 +d34^2 *d14^2 *d02^2 -d23^2
*d04^2 *d03^2 +d03^2 *d12^2 *d24^2 -d34^2 *d04^2 *d02^2 -d23^2
*d13^2 *d02^2 -d23^2 *d03^2 *d12^2 +d34^2 *d04^2 *d12^2 +d23^2
*d04^2 *d12^2 -d34^2 *d03^2 *d02^2 +d34^2 *d14^2 *d13^2 +d34^2
*d03^2 *d12^2 -d23^2 *d14^2 *d12^2 +d23^2 *d14^2 *d03^2 +d34^2
*d04^2 *d03^2 +d23^2 *d03^2 *d02^2 -d23^2 *d04^2 *d02^2 -d14^2
*d13^2 *d24^2 +d34^2 *d13^2 *d02^2 +d13^2 *d02^2 *d24^2 +d23^2
*d04^2 *d13^2 -d34^2 *d04^2 *d13^2 -d23^2 *d14^2 *d13^2 +d04^2
*d02^2 *d24^2 +d14^2 *d12^2 *d24^2 -d03^2 *d02^2 *d24^2 -d34^2
*d14^2 *d03^2 +d14^2 *d03^2 *d24^2 -d14^2 *d02^2 *d24^2 -d04^2
*d03^2 *d24^2 +d23^2 *d13^2 *d12^2 +d34^4 *d01^2);
```

```
f0 = ( -2 *d34^4 *d01^2 *d24^2 *d04^2 *d23^2 -2 *d34^2 *d01^2
*d24^4 *d23^2 *d14^2 -6 *d34^2 *d01^2 *d24^4 *d04^2 *d13^2 +8
*d34^2 *d01^2 *d24^4 *d03^2 *d13^2 -4 *d34^2 *d01^2 *d24^2
*d23^2 *d14^2 *d02^2 -2 *d34^4 *d01^2 *d24^2 *d23^2 *d14^2 +6
*d34^2 *d01^2 *d24^4 *d04^2 *d12^2 -2 *d01^2 *d23^2 *d24^4
*d34^2 *d02^2 -2 *d01^2 *d23^4 *d24^2 *d34^2 *d02^2 -2 *d01^2
*d23^2 *d24^4 *d04^2 *d13^2 +8 *d01^2 *d23^2 *d24^4 *d03^2
*d13^2 -6 *d01^2 *d23^4 *d24^2 *d14^2 *d02^2 +6 *d01^2 *d23^2
*d24^4 *d04^2 *d12^2 +4 *d34^2 *d02^4 *d24^2 *d23^2 *d14^2 +4
*d24^4 *d03^4 *d23^2 *d14^2 +6 *d34^2 *d01^2 *d23^6 *d14^2 -6
*d34^4 *d01^2 *d23^4 *d04^2 -6 *d34^4 *d01^2 *d23^4 *d14^2 -2
*d23^6 *d12^2 *d34^2 *d14^2 -2 *d23^4 *d12^2 *d34^4 *d02^2 +2
*d23^6 *d12^2 *d34^2 *d01^2 +4 *d23^4 *d12^2 *d34^4 *d14^2 -2
*d12^2 *d34^4 *d24^4 *d02^2 +2 *d12^2 *d34^2 *d24^6 *d01^2 -2
*d12^4 *d34^2 *d24^4 *d04^2 -2 *d24^2 *d23^6 *d13^2 *d14^2 -4
*d24^4 *d23^4 *d13^2 *d04^2 +4 *d24^4 *d23^4 *d13^2 *d14^2 +4
*d24^4 *d23^2 *d13^4 *d04^2 +6 *d24^6 *d23^2 *d13^2 *d01^2 +2
*d24^2 *d23^6 *d13^2 *d01^2 +2 *d12^2 *d34^6 *d24^2 *d03^2 +2
*d12^2 *d34^6 *d04^2 *d23^2 -2 *d12^2 *d34^6 *d23^2 *d14^2 +4
*d12^4 *d34^4 *d04^2 *d24^2 +2 *d14^2 *d23^6 *d34^2 *d02^2 -2
*d24^2 *d34^4 *d02^4 *d23^2 +2 *d24^6 *d34^2 *d02^2 *d01^2 -2
*d04^4 *d23^4 *d24^2 *d34^2 -2 *d04^2 *d23^4 *d24^4 *d14^2 -2
*d04^4 *d23^2 *d24^4 *d13^2 +2 *d04^2 *d23^2 *d24^6 *d01^2 -2
*d04^4 *d23^2 *d24^4 *d12^2 -2 *d34^6 *d02^4 *d24^2 -2 *d34^6
*d02^4 *d23^2 -2 *d24^6 *d03^4 *d34^2 -2 *d24^8 *d03^2 *d01^2
-2 *d23^8 *d04^2 *d14^2 -2 *d23^6 *d04^4 *d24^2 -2 *d23^6
*d04^4 *d34^2 -2 *d23^8 *d04^2 *d01^2 -4 *d34^2 *d01^4 *d24^6
-4 *d01^4 *d23^2 *d24^6 -4 *d01^4 *d23^6 *d24^2 -4 *d34^2
*d01^4 *d23^6 -2 *d14^4 *d23^6 *d24^2 -2 *d34^6 *d02^2 *d24^2
*d03^2 -4 *d34^2 *d01^2 *d24^4 *d23^2 *d13^2 -2 *d01^2 *d23^4
*d24^2 *d12^2 *d34^2 -2 *d01^2 *d23^2 *d24^4 *d12^2 *d34^2 +4
*d34^2 *d02^4 *d24^2 *d23^2 *d13^2 +4 *d24^2 *d03^4 *d23^2
*d12^2 *d34^2 +4 *d24^4 *d03^4 *d12^2 *d34^2 -2 *d24^2 *d03^4
*d12^2 *d34^4 -6 *d34^4 *d01^2 *d23^4 *d12^2 +6 *d34^6 *d01^2
*d23^2 *d12^2 -2 *d23^2 *d12^4 *d34^4 *d24^2 +4 *d24^2 *d03^4
*d23^2 *d34^2 *d14^2 -2 *d34^4 *d01^2 *d23^2 *d24^2 *d03^2 -4
*d34^2 *d01^2 *d23^2 *d04^2 *d13^2 *d24^2 +8 *d34^2 *d01^2
*d23^2 *d03^2 *d13^2 *d24^2 -2 *d34^2 *d01^2 *d23^4 *d14^2
*d02^2 -4 *d34^2 *d01^2 *d23^2 *d04^2 *d12^2 *d24^2 +4 *d23^2
*d12^2 *d34^4 *d24^2 *d02^2 +4 *d23^4 *d12^2 *d34^2 *d24^2
*d14^2 -4 *d23^2 *d12^2 *d34^2 *d03^2 *d13^2 *d24^2 +2 *d23^4
*d12^2 *d34^2 *d14^2 *d02^2 +4 *d23^2 *d12^4 *d34^2 *d04^2
*d24^2 +2 *d12^2 *d34^2 *d24^4 *d04^2 *d23^2 -4 *d12^2 *d34^4
*d24^2 *d04^2 *d23^2 -2 *d12^2 *d34^2 *d24^4 *d23^2 *d14^2 -2
*d12^2 *d34^2 *d24^4 *d04^2 *d13^2 -4 *d12^2 *d34^2 *d24^4
*d03^2 *d13^2 -4 *d12^2 *d34^2 *d24^2 *d23^2 *d14^2 *d02^2 +4
*d12^2 *d34^4 *d24^2 *d23^2 *d14^2 -4 *d24^4 *d23^2 *d13^2
*d34^2 *d02^2 +4 *d24^4 *d23^2 *d13^2 *d34^2 *d03^2 +2 *d24^2
*d23^4 *d13^2 *d34^2 *d02^2 -4 *d24^2 *d23^4 *d13^2 *d04^2
*d34^2 -2 *d24^2 *d23^4 *d13^2 *d14^2 *d02^2 +4 *d24^2 *d23^4
*d13^2 *d34^2 *d14^2 -8 *d24^4 *d23^2 *d13^2 *d04^2 *d12^2 -2
*d12^2 *d34^4 *d04^2 *d13^2 *d24^2 +2 *d12^2 *d34^4 *d03^2
```

```
*d13^2 *d24^2 -4 *d12^2 *d34^4 *d23^2 *d14^2 *d02^2 +2 *d14^2
*d23^4 *d03^2 *d13^2 *d24^2 -2 *d14^4 *d23^6 *d02^2 -2 *d14^2
*d23^8 *d01^2 -2 *d14^4 *d23^6 *d34^2 +d24^4 *d34^4 *d02^4
+d24^4 *d34^4 *d03^4 +d04^4 *d23^4 *d24^4 +d34^4 *d02^4 *d23^4
+d04^4 *d34^4 *d23^4 +d24^4 *d23^4 *d14^4 +d04^4 *d13^4 *d24^4
+d23^4 *d14^4 *d02^4 +d23^4 *d34^4 *d14^4 +d04^4 *d12^4 *d24^4
-2 *d34^6 *d02^4 *d14^2 -2 *d24^6 *d03^4 *d12^2 -2 *d23^6
*d04^4 *d12^2 -2 *d34^4 *d02^2 *d23^2 *d04^2 *d13^2 -2 *d34^4
*d02^2 *d14^2 *d03^2 *d24^2 -8 *d34^4 *d02^2 *d23^2 *d14^2
*d03^2 +2 *d24^4 *d03^2 *d34^2 *d02^2 *d12^2 +2 *d24^4 *d03^2
*d04^2 *d14^2 *d23^2 -2 *d24^4 *d03^2 *d34^2 *d14^2 *d02^2 -4
*d24^4 *d03^2 *d23^2 *d13^2 *d02^2 +2 *d23^4 *d04^2 *d34^2
*d02^2 *d12^2 -2 *d23^4 *d04^2 *d03^2 *d12^2 *d24^2 -8 *d23^4
*d04^2 *d34^2 *d03^2 *d12^2 -4 *d03^2 *d23^4 *d24^2 *d04^2
*d14^2 +2 *d03^2 *d23^4 *d24^2 *d13^2 *d02^2 +8 *d34^4 *d01^2
*d24^2 *d02^2 *d12^2 +8 *d34^2 *d01^2 *d24^2 *d04^2 *d14^2
*d23^2 -6 *d34^4 *d01^2 *d24^2 *d14^2 *d02^2 +2 *d34^4 *d02^2
*d04^2 *d14^2 *d23^2 -4 *d34^4 *d02^2 *d03^2 *d12^2 *d24^2 -4
*d34^4 *d02^2 *d23^2 *d03^2 *d12^2 -4 *d34^4 *d02^2 *d23^2
*d04^2 *d12^2 -4 *d03^2 *d23^2 *d24^2 *d34^2 *d02^2 *d12^2
+d34^8 *d02^4 +d24^8 *d03^4 +d23^8 *d04^4 +d12^4 *d34^8 +d14^4
*d23^8 +d01^4 *d23^8 +d34^8 *d01^4 +d24^8 *d13^4 +4 *d34^4
*d02^2 *d03^2 *d23^2 *d24^2 -4 *d34^4 *d02^2 *d01^2 *d23^2
*d24^2 -4 *d34^4 *d02^2 *d24^2 *d23^2 *d13^2 -4 *d24^4 *d03^2
*d34^2 *d01^2 *d23^2 -4 *d24^4 *d03^2 *d23^2 *d12^2 *d34^2 -4
*d23^4 *d04^2 *d34^2 *d01^2 *d24^2 -4 *d23^4 *d04^2 *d12^2
*d34^2 *d24^2 -2 *d03^2 *d23^4 *d24^2 *d34^2 *d01^2 +2 *d03^2
*d23^4 *d24^2 *d12^2 *d34^2 -4 *d03^2 *d23^2 *d24^2 *d12^2
*d34^4 +4 *d04^4 *d23^2 *d12^2 *d34^2 *d24^2 -4 *d34^4 *d01^2
*d24^2 *d23^2 *d12^2 -8 *d14^2 *d23^4 *d03^2 *d12^2 *d24^2 +2
*d14^2 *d23^6 *d04^2 *d12^2 -2 *d34^4 *d01^2 *d24^2 *d13^2
*d02^2 -2 *d34^2 *d01^2 *d24^4 *d13^2 *d02^2 +6 *d34^4 *d01^2
*d24^2 *d04^2 *d13^2 +6 *d34^4 *d01^2 *d24^2 *d14^2 *d03^2 -6
*d34^2 *d01^2 *d24^4 *d14^2 *d03^2 +6 *d34^2 *d01^2 *d24^4
*d14^2 *d02^2 +8 *d34^4 *d01^2 *d23^2 *d02^2 *d12^2 +8 *d34^2
*d01^2 *d23^4 *d04^2 *d14^2 -2 *d34^4 *d01^2 *d23^2 *d14^2
*d02^2 +6 *d34^2 *d01^2 *d23^4 *d13^2 *d02^2 +6 *d34^2 *d01^2
*d23^4 *d03^2 *d12^2 -2 *d34^4 *d01^2 *d23^2 *d04^2 *d12^2 -2
*d34^2 *d01^2 *d23^4 *d04^2 *d12^2 -6 *d34^4 *d01^2 *d23^2
*d03^2 *d12^2 -6 *d34^2 *d01^2 *d23^4 *d14^2 *d03^2 -4 *d23^4
*d12^2 *d34^2 *d04^2 *d14^2 +4 *d23^2 *d12^4 *d34^2 *d03^2
*d24^2 +2 *d23^4 *d12^2 *d34^2 *d13^2 *d02^2 -2 *d23^4 *d12^2
*d34^2 *d14^2 *d03^2 +10 *d23^2 *d12^2 *d34^4 *d04^2 *d03^2 -4
*d12^2 *d34^4 *d24^2 *d14^2 *d02^2 -4 *d12^2 *d34^2 *d24^2
*d23^2 *d13^2 *d02^2 +10 *d12^2 *d34^4 *d24^2 *d04^2 *d03^2 -4
*d24^4 *d23^2 *d13^2 *d03^2 *d12^2 +2 *d24^2 *d23^4 *d13^2
*d03^2 *d12^2 +10 *d24^2 *d23^4 *d13^2 *d04^2 *d12^2 +2 *d12^2
*d34^4 *d04^2 *d14^2 *d23^2 -4 *d12^2 *d34^4 *d23^2 *d13^2
*d02^2 -2 *d12^2 *d34^4 *d23^2 *d14^2 *d03^2 -2 *d23^4 *d04^2
*d34^2 *d13^2 *d02^2 -8 *d23^4 *d04^2 *d13^2 *d02^2 *d24^2 -4
*d23^4 *d04^2 *d34^2 *d14^2 *d03^2 +4 *d04^4 *d34^2 *d23^2
*d13^2 *d24^2 -4 *d04^2 *d34^2 *d23^2 *d03^2 *d13^2 *d24^2 -4
```

```
*d04^2 *d34^2 *d23^4 *d14^2 *d02^2 +2 *d24^4 *d23^2 *d14^2
*d04^2 *d13^2 -4 *d24^4 *d23^2 *d14^2 *d03^2 *d13^2 +2 *d24^4
*d23^2 *d14^2 *d04^2 *d12^2 -4 *d04^2 *d13^2 *d24^2 *d23^2
*d14^2 *d02^2 -2 *d04^2 *d13^2 *d24^2 *d01^2 *d23^4 -4 *d04^2
*d13^2 *d24^2 *d23^2 *d34^2 *d14^2 -4 *d03^2 *d13^2 *d24^2
*d23^2 *d14^2 *d02^2 -4 *d03^2 *d13^2 *d24^2 *d01^2 *d23^4 -4
*d03^2 *d13^2 *d24^2 *d23^2 *d34^2 *d14^2 +2 *d03^2 *d13^2
*d24^4 *d04^2 *d12^2 +6 *d23^2 *d14^2 *d02^2 *d01^2 *d24^4 +4
*d23^2 *d14^2 *d02^2 *d04^2 *d12^2 *d24^2 -6 *d01^2 *d23^4
*d04^2 *d12^2 *d24^2 -4 *d23^2 *d34^2 *d14^2 *d04^2 *d12^2
*d24^2 +d03^4 *d23^4 *d24^4 +6 *d34^4 *d01^4 *d24^4 +6 *d01^4
*d23^4 *d24^4 +6 *d34^4 *d01^4 *d23^4 +d23^4 *d12^4 *d34^4 -2
*d23^2 *d12^4 *d34^6 +12^4 *d34^4 *d24^4 -2 *d12^4 *d34^6
*d24^2 +d24^4 *d23^4 *d13^4 -2 *d34^2 *d01^2 *d24^4 *d03^2
*d12^2 -4 *d34^2 *d01^2 *d24^2 *d23^2 *d13^2 *d02^2 -4 *d34^2
*d01^2 *d24^2 *d23^2 *d03^2 *d12^2 -6 *d34^4 *d01^2 *d24^2
*d04^2 *d12^2 -2 *d34^4 *d01^2 *d24^2 *d03^2 *d12^2 -4 *d34^2
*d01^2 *d24^2 *d23^2 *d14^2 *d03^2 +8 *d01^2 *d23^2 *d24^2
*d34^2 *d02^2 *d12^2 +8 *d01^2 *d23^4 *d24^2 *d04^2 *d14^2 -6
*d01^2 *d23^2 *d24^4 *d03^2 *d12^2 +6 *d01^2 *d23^4 *d24^2
*d13^2 *d02^2 +6 *d01^2 *d23^4 *d24^2 *d03^2 *d12^2 -2 *d01^2
*d23^4 *d24^2 *d14^2 *d03^2 -2 *d12^4 *d34^6 *d04^2 -2 *d12^4
*d34^6 *d03^2 -2 *d34^6 *d02^4 *d13^2 -2 *d34^8 *d02^2 *d01^2
-2 *d24^6 *d03^4 *d14^2 -2 *d24^8 *d03^2 *d13^2 -2 *d23^6
*d04^4 *d13^2 -4 *d34^6 *d01^4 *d24^2 -4 *d34^6 *d01^4 *d23^2
-2 *d24^6 *d23^2 *d13^4 -2 *d12^2 *d34^8 *d01^2 -2 *d14^4
*d23^6 *d03^2 -2 *d01^2 *d24^8 *d13^2 +d34^4 *d14^4 *d02^4
+d03^4 *d12^4 *d24^4 +d23^4 *d13^4 *d02^4 +d23^4 *d03^4 *d12^4
+d34^4 *d04^4 *d12^4 +d23^4 *d04^4 *d12^4 +d34^4 *d03^4 *d12^4
+d23^4 *d14^4 *d03^4 +d34^4 *d13^4 *d02^4 +d13^4 *d02^4 *d24^4
-2 *d13^4 *d02^2 *d24^6 +d23^4 *d04^4 *d13^4 +d14^4 *d03^4
*d24^4 +d14^4 *d02^4 *d24^4 +d34^4 *d24^4 *d13^4 -2 *d34^2
*d24^6 *d13^4 -2 *d34^8 *d02^2 *d12^2 -2 *d34^2 *d01^2 *d23^4
*d24^2 *d13^2 -2 *d23^4 *d12^2 *d34^2 *d24^2 *d13^2 +4 *d12^2
*d34^2 *d24^4 *d23^2 *d13^2 -4 *d34^4 *d02^2 *d14^2 *d23^4 -2
*d34^6 *d02^2 *d04^2 *d23^2 +4 *d34^4 *d02^4 *d23^2 *d14^2 -6
*d34^4 *d02^2 *d01^2 *d24^4 -6 *d34^4 *d02^2 *d01^2 *d23^4 +2
*d34^6 *d02^2 *d23^2 *d14^2 -4 *d24^4 *d03^2 *d14^2 *d23^4 -2
*d24^6 *d03^2 *d34^2 *d02^2 -2 *d24^6 *d03^2 *d04^2 *d23^2 +2
*d24^6 *d03^2 *d23^2 *d14^2 +2 *d24^6 *d03^2 *d04^2 *d13^2 +2
*d24^6 *d03^2 *d04^2 *d12^2 -2 *d23^6 *d04^2 *d34^2 *d02^2 +4
*d23^6 *d04^2 *d24^2 *d14^2 +2 *d23^6 *d04^2 *d14^2 *d02^2 -6
*d23^4 *d04^2 *d01^2 *d24^4 +4 *d23^6 *d04^2 *d34^2 *d14^2 +4
*d23^4 *d04^4 *d12^2 *d24^2 +2 *d03^2 *d23^6 *d24^2 *d14^2 -2
*d03^4 *d23^2 *d24^4 *d34^2 +2 *d03^2 *d23^6 *d24^2 *d01^2 -6
*d34^4 *d01^2 *d24^4 *d03^2 +6 *d01^2 *d23^6 *d24^2 *d14^2 -6
*d01^2 *d23^4 *d24^4 *d14^2 -2 *d34^2 *d02^4 *d14^2 *d23^4 -2
*d24^2 *d03^4 *d14^2 *d23^4 -6 *d01^2 *d23^2 *d24^4 *d13^2
*d02^2 -2 *d01^2 *d23^2 *d24^4 *d14^2 *d03^2 +4 *d12^2 *d34^4
*d24^4 *d13^2 -2 *d12^2 *d34^2 *d24^6 *d13^2 +4 *d24^4 *d23^2
*d13^4 *d02^2 -2 *d24^2 *d23^4 *d13^4 *d04^2 -2 *d24^4 *d23^2
*d13^4 *d34^2 +2 *d12^2 *d34^6 *d13^2 *d02^2 +2 *d12^2 *d34^6
```

```
*d04^2 *d13^2 +2 *d12^2 *d34^6 *d14^2 *d03^2 -2 *d12^2 *d34^6
*d24^2 *d13^2 +2 *d14^2 *d23^6 *d13^2 *d02^2 +2 *d14^2 *d23^6
*d03^2 *d12^2 -2 *d34^2 *d02^4 *d23^4 *d13^2 +4 *d24^2 *d23^4
*d14^4 *d03^2 -2 *d23^2 *d14^4 *d02^4 *d34^2 -2 *d23^4 *d14^2
*d02^4 *d13^2 -2 *d23^4 *d14^4 *d02^2 *d03^2 +2 *d01^2 *d24^6
*d03^2 *d12^2 -4 *d01^2 *d23^6 *d04^2 *d14^2 -2 *d01^2 *d23^6
*d13^2 *d02^2 -2 *d01^2 *d23^6 *d03^2 *d12^2 -4 *d14^2 *d23^4
*d04^2 *d12^2 *d24^2 -2 *d24^4 *d34^2 *d02^2 *d04^2 *d23^2 +2
*d24^4 *d34^2 *d02^2 *d23^2 *d14^2 +10 *d24^4 *d34^2 *d02^2
*d04^2 *d13^2 -4 *d24^4 *d34^2 *d02^2 *d03^2 *d13^2 +2 *d24^4
*d34^2 *d02^2 *d04^2 *d12^2 -2 *d24^2 *d34^4 *d03^2 *d04^2
*d23^2 -4 *d24^4 *d34^2 *d03^2 *d04^2 *d13^2 +2 *d24^2 *d34^4
*d03^2 *d23^2 *d14^2 -8 *d24^4 *d34^2 *d03^2 *d04^2 *d12^2 -4
*d04^2 *d23^4 *d24^2 *d14^2 *d02^2 +4 *d04^2 *d23^4 *d24^2
*d34^2 *d14^2 +2 *d34^2 *d02^2 *d23^6 *d01^2 +4 *d34^4 *d02^2
*d24^4 *d03^2 +4 *d34^4 *d02^2 *d23^4 *d04^2 +6 *d34^6 *d02^2
*d01^2 *d24^2 +6 *d34^6 *d02^2 *d01^2 *d23^2 +4 *d34^6 *d02^2
*d23^2 *d12^2 +4 *d34^6 *d02^2 *d12^2 *d24^2 +4 *d24^4 *d03^2
*d23^4 *d04^2 +6 *d24^6 *d03^2 *d34^2 *d01^2 +6 *d24^6 *d03^2
*d01^2 *d23^2 +2 *d24^6 *d03^2 *d12^2 *d34^2 +4 *d24^6 *d03^2
*d23^2 *d13^2 -4 *d24^4 *d03^2 *d12^2 *d34^4 -2 *d23^6 *d04^2
*d03^2 *d24^2 +6 *d23^6 *d04^2 *d01^2 *d24^2 +6 *d23^6 *d04^2
*d34^2 *d01^2 +2 *d23^6 *d04^2 *d12^2 *d34^2 +2 *d23^6 *d04^2
*d24^2 *d13^2 -4 *d23^4 *d04^2 *d12^2 *d34^4 -6 *d03^2 *d23^4
*d24^4 *d01^2 -2 *d03^2 *d23^4 *d24^4 *d13^2 +4 *d04^4 *d23^4
*d12^2 *d34^2 +4 *d04^4 *d23^4 *d24^2 *d13^2 -2 *d04^4 *d23^2
*d12^2 *d34^4 +4 *d34^2 *d01^4 *d24^4 *d23^2 +4 *d34^4 *d01^4
*d24^2 *d23^2 -6 *d34^4 *d01^2 *d24^4 *d12^2 +6 *d34^6 *d01^2
*d24^2 *d12^2 +4 *d01^4 *d23^4 *d24^2 *d34^2 -6 *d01^2 *d23^4
*d24^4 *d13^2 -2 *d23^4 *d12^4 *d34^2 *d03^2 +4 *d23^2 *d12^4
*d34^4 *d04^2 -2 *d23^4 *d12^4 *d34^2 *d04^2 +4 *d23^2 *d12^4
*d34^4 *d03^2 -2 *d12^4 *d34^2 *d24^4 *d03^2 +4 *d12^4 *d34^4
*d24^2 *d03^2 -2 *d24^2 *d23^4 *d13^4 *d02^2 +2 *d12^2 *d34^6
*d14^2 *d02^2 -4 *d12^2 *d34^6 *d04^2 *d03^2 +4 *d34^4 *d02^4
*d13^2 *d24^2 +2 *d34^6 *d02^2 *d04^2 *d13^2 +2 *d34^6 *d02^2
*d14^2 *d03^2 +4 *d34^4 *d02^4 *d14^2 *d24^2 +2 *d34^6 *d02^2
*d24^2 *d13^2 -4 *d34^4 *d02^2 *d24^4 *d13^2 +2 *d24^6 *d03^2
*d13^2 *d02^2 +4 *d24^4 *d03^4 *d34^2 *d14^2 +2 *d24^6 *d03^2
*d14^2 *d02^2 +4 *d24^6 *d03^2 *d34^2 *d13^2 +4 *d23^4 *d04^4
*d34^2 *d13^2 -6 *d34^4 *d01^2 *d24^4 *d13^2 +6 *d34^2 *d01^2
*d24^6 *d13^2 -2 *d34^2 *d02^4 *d24^4 *d13^2 -2 *d24^6 *d03^4
*d23^2 -6 *d34^4 *d01^2 *d23^2 *d13^2 *d02^2 -6 *d34^2 *d01^2
*d23^4 *d04^2 *d13^2 +6 *d34^4 *d01^2 *d23^2 *d04^2 *d13^2 +6
*d34^4 *d01^2 *d23^2 *d14^2 *d03^2 -2 *d34^4 *d01^2 *d23^2
*d24^2 *d13^2 +2 *d23^4 *d12^2 *d34^2 *d03^2 *d02^2 +10 *d23^4
*d12^2 *d34^2 *d04^2 *d13^2 -8 *d23^2 *d12^2 *d34^4 *d04^2
*d13^2 -4 *d12^2 *d34^4 *d24^2 *d13^2 *d02^2 +2 *d12^2 *d34^2
*d24^4 *d13^2 *d02^2 -8 *d12^2 *d34^4 *d24^2 *d14^2 *d03^2 +10
*d12^2 *d34^2 *d24^4 *d14^2 *d03^2 +2 *d12^2 *d34^2 *d24^4
*d14^2 *d02^2 +4 *d24^2 *d23^2 *d13^4 *d34^2 *d02^2 +4 *d24^2
*d23^2 *d13^4 *d34^2 *d04^2 +10 *d24^4 *d23^2 *d13^2 *d04^2
*d02^2 -2 *d24^4 *d23^2 *d13^2 *d14^2 *d02^2 +10 *d14^2 *d23^4
```

*d34^2 *d03^2 *d02^2 -4 *d24^2 *d34^2 *d02^2 *d04^2 *d14^2
*d23^2 -4 *d14^2 *d23^4 *d34^2 *d04^2 *d13^2 -4 *d24^2 *d34^2
*d03^2 *d04^2 *d14^2 *d23^2 +4 *d24^2 *d23^2 *d14^4 *d34^2
*d02^2 +10 *d24^4 *d23^2 *d14^2 *d03^2 *d12^2 -4 *d04^2 *d13^2
*d24^2 *d34^2 *d02^2 *d12^2 -4 *d04^2 *d13^2 *d24^2 *d34^2
*d14^2 *d02^2 +4 *d04^2 *d13^4 *d24^2 *d23^2 *d02^2 -4 *d04^2
*d13^2 *d24^2 *d23^2 *d03^2 *d12^2 +4 *d04^4 *d13^2 *d24^2
*d34^2 *d12^2 +4 *d04^4 *d13^2 *d24^2 *d23^2 *d12^2 -4 *d04^2
*d13^2 *d24^2 *d34^2 *d03^2 *d12^2 +4 *d04^2 *d13^2 *d24^2
*d23^2 *d14^2 *d03^2 +4 *d03^2 *d13^2 *d24^2 *d34^2 *d02^2
*d12^2 -4 *d03^2 *d13^2 *d24^2 *d34^2 *d14^2 *d02^2 -4 *d23^2
*d14^2 *d02^2 *d03^2 *d12^2 *d24^2 +2 *d23^4 *d14^2 *d02^2
*d03^2 *d12^2 +4 *d23^2 *d14^2 *d02^2 *d34^2 *d04^2 *d12^2 -2
*d23^4 *d14^2 *d02^2 *d04^2 *d12^2 -4 *d23^2 *d14^2 *d02^2
*d34^2 *d03^2 *d12^2 -2 *d04^2 *d13^4 *d24^6 -4 *d01^2 *d24^4
*d34^2 *d02^2 *d12^2 -4 *d01^2 *d24^4 *d04^2 *d14^2 *d23^2 -4
*d01^2 *d23^4 *d34^2 *d02^2 *d12^2 +2 *d01^2 *d23^6 *d04^2
*d12^2 +2 *d01^2 *d23^6 *d14^2 *d03^2 -2 *d23^2 *d34^4 *d14^4
*d02^2 +4 *d23^4 *d34^2 *d14^4 *d03^2 -2 *d04^2 *d12^4 *d24^4
*d03^2 -2 *d04^4 *d12^4 *d24^2 *d34^2 -2 *d04^4 *d12^4 *d24^2
*d23^2 -4 *d14^2 *d23^6 *d03^2 *d02^2 +2 *d14^2 *d23^6 *d04^2
*d13^2 -2 *d24^4 *d34^2 *d02^4 *d14^2 +2 *d24^6 *d34^2 *d02^2
*d13^2 -2 *d24^2 *d34^4 *d03^4 *d14^2 +2 *d24^2 *d34^6 *d03^2
*d01^2 -2 *d24^4 *d34^4 *d03^2 *d13^2 +2 *d04^2 *d23^2 *d24^6
*d13^2 -2 *d04^4 *d34^4 *d23^2 *d13^2 +2 *d04^2 *d34^6 *d23^2
*d01^2 -2 *d24^4 *d23^2 *d14^4 *d03^2 -2 *d24^4 *d23^2 *d14^4
*d02^2 -2 *d24^6 *d23^2 *d14^2 *d13^2 -2 *d04^2 *d13^4 *d24^4
*d02^2 -2 *d04^4 *d13^4 *d24^2 *d23^2 -2 *d04^4 *d13^4 *d24^2
*d34^2 +4 *d04^2 *d13^4 *d24^4 *d34^2 -8 *d23^4 *d34^2 *d14^2
*d13^2 *d02^2 +2 *d23^2 *d34^4 *d14^2 *d04^2 *d03^2 +4 *d04^2
*d12^2 *d24^2 *d34^2 *d14^2 *d02^2 -4 *d04^2 *d12^2 *d24^2
*d23^2 *d13^2 *d02^2 +4 *d04^2 *d12^4 *d24^2 *d23^2 *d03^2 +4
*d04^2 *d12^4 *d24^2 *d34^2 *d03^2 -4 *d04^2 *d12^2 *d24^2
*d23^2 *d14^2 *d03^2 +2 *d24^2 *d34^4 *d03^2 *d04^2 *d13^2 +2
*d04^2 *d23^2 *d24^4 *d14^2 *d02^2 -4 *d04^2 *d23^2 *d24^4
*d34^2 *d13^2 +2 *d04^2 *d34^4 *d23^2 *d24^2 *d13^2 +4 *d24^2
*d23^2 *d14^4 *d34^2 *d03^2 +4 *d24^4 *d23^2 *d14^2 *d34^2
*d13^2 +4 *d04^2 *d13^4 *d24^2 *d34^2 *d02^2 +4 *d04^2 *d13^2
*d24^2 *d34^2 *d14^2 *d03^2 -2 *d04^2 *d13^2 *d24^4 *d14^2
*d03^2 +2 *d04^2 *d13^2 *d24^4 *d14^2 *d02^2 -4 *d34^2 *d02^2
*d23^2 *d03^2 *d13^2 *d24^2 -4 *d34^2 *d02^2 *d23^2 *d04^2
*d12^2 *d24^2 -2 *d04^2 *d34^4 *d23^4 *d14^2 +4 *d24^2 *d23^4
*d14^4 *d02^2 +2 *d24^6 *d23^2 *d14^2 *d01^2 -2 *d24^2 *d23^4
*d14^4 *d34^2 +2 *d04^2 *d13^2 *d24^6 *d01^2 -2 *d04^4 *d13^2
*d24^4 *d12^2 -4 *d03^2 *d13^2 *d24^6 *d01^2 +2 *d23^6 *d14^2
*d02^2 *d01^2 +4 *d23^4 *d14^4 *d02^2 *d34^2 -2 *d01^2 *d24^6
*d04^2 *d12^2 +4 *d34^4 *d02^4 *d23^2 *d13^2 +2 *d34^6 *d02^2
*d04^2 *d12^2 +2 *d34^6 *d02^2 *d03^2 *d12^2 +4 *d24^4 *d03^4
*d23^2 *d12^2 +2 *d23^6 *d04^2 *d13^2 *d02^2 +2 *d23^6 *d04^2
*d03^2 *d12^2 +2 *d23^6 *d04^2 *d14^2 *d03^2 -2 *d03^4 *d23^4
*d24^2 *d12^2 +2 *d04^2 *d14^2 *d23^4 *d03^2 *d12^2 -4 *d04^2
*d14^2 *d23^2 *d34^2 *d03^2 *d12^2 -4 *d34^2 *d14^2 *d02^2

```
*d03^2 *d12^2 *d24^2 -2 *d34^4 *d14^2 *d02^2 *d04^2 *d12^2 +2
*d34^4 *d14^2 *d02^2 *d03^2 *d12^2 +4 *d23^2 *d14^2 *d02^4
*d34^2 *d13^2 +4 *d23^2 *d14^2 *d02^4 *d13^2 *d24^2 +2 *d23^4
*d14^2 *d02^2 *d04^2 *d13^2 -4 *d23^2 *d14^2 *d02^2 *d34^2
*d04^2 *d13^2 +4 *d23^2 *d14^4 *d02^2 *d34^2 *d03^2 +4 *d23^2
*d14^4 *d02^2 *d03^2 *d24^2 +10 *d23^2 *d34^4 *d14^2 *d13^2
*d02^2 +2 *d23^2 *d34^4 *d14^2 *d04^2 *d13^2 -2 *d23^2 *d34^4
*d14^2 *d24^2 *d13^2 +2 *d04^2 *d12^2 *d24^4 *d13^2 *d02^2 -4
*d04^2 *d12^2 *d24^2 *d34^2 *d14^2 *d03^2 +2 *d04^2 *d12^2
*d24^4 *d14^2 *d03^2 -2 *d04^2 *d12^2 *d24^4 *d14^2 *d02^2 +2
*d03^2 *d13^2 *d24^4 *d14^2 *d02^2 -4 *d03^2 *d13^2 *d24^2
*d34^4 *d01^2 -2 *d23^2 *d14^4 *d02^4 *d24^2 +2 *d01^2 *d24^6
*d13^2 *d02^2 +2 *d01^2 *d24^6 *d14^2 *d03^2 -2 *d01^2 *d24^6
*d14^2 *d02^2 +2 *d01^2 *d23^6 *d04^2 *d13^2 -2 *d23^2 *d34^4
*d14^4 *d03^2 +2 *d23^2 *d34^6 *d14^2 *d01^2 +2 *d04^2 *d12^2
*d24^6 *d13^2 -2 *d03^4 *d12^4 *d24^2 *d23^2 -2 *d03^4 *d12^4
*d24^2 *d34^2 -2 *d23^4 *d03^2 *d12^4 *d04^2 -2 *d23^2 *d03^4
*d12^4 *d34^2 -2 *d23^4 *d03^4 *d12^2 *d14^2 -2 *d34^2 *d04^4
*d12^4 *d23^2 -2 *d34^4 *d04^2 *d12^4 *d03^2 -4 *d34^6 *d02^2
*d12^2 *d01^2 -2 *d34^4 *d14^2 *d02^4 *d13^2 -2 *d34^4 *d14^4
*d02^2 *d03^2 -2 *d34^2 *d14^4 *d02^4 *d24^2 +2 *d34^6 *d14^2
*d02^2 *d01^2 -2 *d03^4 *d12^2 *d24^4 *d14^2 +2 *d03^2 *d12^2
*d24^6 *d13^2 -2 *d23^2 *d13^4 *d02^4 *d34^2 -2 *d23^2 *d13^4
*d02^4 *d24^2 -2 *d23^4 *d13^4 *d02^2 *d04^2 -2 *d34^4 *d04^4
*d12^2 *d13^2 +2 *d34^6 *d04^2 *d12^2 *d01^2 -2 *d23^4 *d04^4
*d12^2 *d13^2 -2 *d34^4 *d03^4 *d12^2 *d14^2 +2 *d34^6 *d03^2
*d12^2 *d01^2 -2 *d23^2 *d14^4 *d03^4 *d34^2 -2 *d23^2 *d14^4
*d03^4 *d24^2 -2 *d34^2 *d13^4 *d02^4 *d24^2 -2 *d34^4 *d13^4
*d02^2 *d04^2 +2 *d34^6 *d13^2 *d02^2 *d01^2 -2 *d34^4 *d13^4
*d02^2 *d24^2 +4 *d34^2 *d13^4 *d02^2 *d24^4 -2 *d13^2 *d02^4
*d24^4 *d14^2 -2 *d23^2 *d04^4 *d13^4 *d34^2 -2 *d34^6 *d04^2
*d13^2 *d01^2 -2 *d34^4 *d04^2 *d13^4 *d24^2 -4 *d04^2 *d02^2
*d24^6 *d13^2 -2 *d23^4 *d13^2 *d02^2 *d03^2 *d12^2 -4 *d23^2
*d13^2 *d02^2 *d34^2 *d04^2 *d12^2 +2 *d23^4 *d13^2 *d02^2
*d04^2 *d12^2 +4 *d23^2 *d13^2 *d02^2 *d34^2 *d03^2 *d12^2 +2
*d23^4 *d13^2 *d02^2 *d14^2 *d03^2 +4 *d23^2 *d03^2 *d12^4
*d34^2 *d04^2 +4 *d34^2 *d03^4 *d12^2 *d23^2 *d14^2 +2 *d34^4
*d02^2 *d12^2 *d04^2 *d13^2 +4 *d03^2 *d12^2 *d24^2 *d23^2
*d13^2 *d02^2 +4 *d03^4 *d12^2 *d24^2 *d23^2 *d14^2 +4 *d24^2
*d23^2 *d13^2 *d12^2 *d34^4 -4 *d14^2 *d23^4 *d24^2 *d34^2
*d02^2 -4 *d14^2 *d23^4 *d04^2 *d13^2 *d24^2 +d01^4 *d24^8 +4
*d34^4 *d02^2 *d04^2 *d23^2 *d24^2 -4 *d34^4 *d02^2 *d24^2
*d23^2 *d14^2 -8 *d34^4 *d02^2 *d04^2 *d13^2 *d24^2 +2 *d34^4
*d02^2 *d03^2 *d13^2 *d24^2 -4 *d34^4 *d02^2 *d04^2 *d12^2
*d24^2 +4 *d24^4 *d03^2 *d34^2 *d02^2 *d23^2 +4 *d24^4 *d03^2
*d04^2 *d34^2 *d23^2 -8 *d24^4 *d03^2 *d23^2 *d14^2 *d02^2 -4
*d24^4 *d03^2 *d23^2 *d34^2 *d14^2 +4 *d23^4 *d04^2 *d24^2
*d34^2 *d02^2 +4 *d23^4 *d04^2 *d24^2 *d34^2 *d03^2 +2 *d23^4
*d04^2 *d03^2 *d13^2 *d24^2 -2 *d03^2 *d23^4 *d24^2 *d34^2
*d02^2 -4 *d03^2 *d23^2 *d24^4 *d04^2 *d13^2 +10 *d03^2 *d23^4
*d24^2 *d14^2 *d02^2 -4 *d03^2 *d23^4 *d24^2 *d34^2 *d14^2 -2
*d03^2 *d23^2 *d24^4 *d04^2 *d12^2 -4 *d34^2 *d01^2 *d24^2
```

```
*d14^2 *d23^4 -2 *d34^2 *d01^2 *d24^4 *d04^2 *d23^2 -2 *d03^2
*d12^2 *d24^4 *d13^2 *d02^2 +4 *d03^4 *d12^2 *d24^2 *d34^2
*d14^2 +2 *d03^2 *d12^2 *d24^4 *d14^2 *d02^2 +4 *d23^2 *d13^4
*d02^2 *d34^2 *d04^2 -4 *d23^2 *d13^2 *d02^2 *d34^2 *d14^2
*d03^2 +2 *d23^4 *d03^2 *d12^2 *d04^2 *d13^2 -4 *d23^2 *d03^2
*d12^2 *d34^2 *d04^2 *d13^2 +4 *d34^2 *d04^4 *d12^2 *d23^2
*d13^2 +2 *d34^4 *d04^2 *d12^2 *d14^2 *d03^2 -4 *d04^2 *d14^2
*d23^2 *d34^4 *d01^2 +4 *d34^2 *d14^2 *d02^4 *d13^2 *d24^2 +2
*d34^4 *d14^2 *d02^2 *d04^2 *d13^2 +4 *d34^2 *d14^4 *d02^2
*d03^2 *d24^2 +10 *d34^4 *d14^2 *d02^2 *d24^2 *d13^2 -8 *d34^2
*d14^2 *d02^2 *d24^4 *d13^2 -2 *d34^4 *d04^2 *d13^2 *d14^2
*d03^2 -2 *d34^2 *d14^4 *d03^4 *d24^2 -2 *d34^6 *d14^2 *d03^2
*d01^2 -2 *d14^4 *d03^2 *d24^4 *d02^2 +2 *d14^2 *d03^2 *d24^6
*d13^2 +2 *d14^2 *d02^2 *d24^6 *d13^2 +2 *d34^6 *d01^2 *d24^2
*d13^2 +d34^4 *d14^4 *d03^4 +2 *d34^4 *d13^2 *d02^2 *d14^2
*d03^2 +d34^4 *d04^4 *d13^4 -2 *d34^4 *d03^2 *d12^2 *d13^2
*d02^2 +2 *d34^4 *d03^2 *d12^2 *d04^2 *d13^2 -2 *d23^4 *d14^2
*d03^2 *d04^2 *d13^2 +4 *d23^2 *d14^2 *d03^2 *d34^2 *d04^2
*d13^2 +2 *d34^4 *d14^2 *d03^2 *d24^2 *d13^2 -4 *d34^2 *d14^2
*d03^2 *d24^4 *d13^2 +8 *d34^4 *d01^2 *d24^4 *d23^2 +8 *d01^2
*d23^4 *d24^4 *d34^2 +8 *d34^4 *d01^2 *d23^4 *d24^2 -4 *d01^2
*d24^6 *d34^2 *d23^2 -4 *d01^2 *d23^6 *d34^2 *d24^2 -4 *d14^2
*d12^2 *d24^6 *d03^2 -4 *d23^6 *d13^2 *d12^2 *d04^2 -4 *d34^6
*d14^2 *d13^2 *d02^2 -4 *d34^6 *d01^2 *d23^2 *d24^2)^(1/2);
```

**Claims**

1. A method for analytically estimating a distance ($d_{01}$) between a point (O) and at least one of at least four reference devices (A, B, C, D) comprising the steps of:

   (a) obtaining distances ($d_{12}$, $d_{13}$, $d_{14}$, $d_{23}$, $d_{24}$, $d_{34}$) between said at least four reference devices (A, B, C, D);
   (b) estimating differences ($d_{0ij}$) in distance ($d_{0j}$) from said point (O) and said at least four reference devices (A, B, C, D) by estimating differences in travel time of wireless signals between said point (O) and said reference devices (A, B, C, D);
   **characterized by**
   (c) obtaining the analytical solution for the distance $d_{01}$ between point O and reference device A by solving a quartic equation expanded from the equation $f_1^2 * V_{ABCD}^2 - (f_1+f_2)^2 * V_{OBCD}^2 = 0$, wherein
   $f_1 = -d_{34}^4*d_{02}^2 - d_{24}^4*d_{03}^2 - d_{23}^4*d_{04}^2 + d_{03}^2 d_{23}^2 d_{24}^2 - 2*d_{04}^4*d_{23}^2 + 2*d_{34}^2*d_{01}^2*d_{24}^2 + 2*d_{01}^2 d_{23}^2 d_{24}^2 - 2*d_{34}^2*d_{02}^4 - 2*d_{24}^2*d_{03}^4 + 2*d_{34}^2*d_{01}^2*d_{23}^2 - d_{23}^2*d_{12}^2*d_{34}^2 - d_{12}^2 d_{34}^2 d_{24}^2 - d_{24}^2*d_{23}^2*d_{13}^2 + d_{12}^*d_{34}^4 + d_{14}^2*d_{23}^4 + d_{24}^2*d_{34}^2*d_{02}^2 + d_{24}^2*d_{34}^2*d_{03} + d_{04}^2*d_{23}^2*d_{24}^2 + d_{34}^2*d_{02}^2*d_{23}^2 + d_{04}^2*d_{34}^2*d_{23}^2 - d_{24}^2*d_{23}^2*d_{14}^2 - d_{04}^2*d_{13}^2*d_{24}^2 + 2*d_{03}^2*d_{13}^2*d_{24}^2 - d_{23}^2*d_{14}^2*d_{02}^2 - d_{01}^2*d_{24}^4 - d_{01}^2*d_{23}^4 - d_{23}^2*d_{34}^2*d_{14}^2 + d_{04}^2*d_{12}^2*d_{24}^2 + 2*d_{34}^2*d_{02}^2*d_{12}^2 + 2*d_{04}^2*d_{14}^2*d_{23}^2 - d_{34}^2*d_{14}^2*d_{02}^2 + 2*d_{23}^2*d_{04}^2*d_{03}^2 - d_{03}^2*d_{12}^2 d_{24}^2 + 2*d_{34}^2*d_{04}^2*d_{02}^2 + d_{23}^2*d_{13}^2*d_{02}^2 + d_{23}^2*d_{03}^2*d_{12}^2 - d_{34}^2*d_{04}^2*d_{12}^2 - d_{23}^2*d_{04}^2*d_{12}^2 + 2*d_{34}^2*d_{03}^2*d_{02}^2 - d_{34}^2*d_{03}^2*d_{12}^2 - d_{23}^2*d_{14}^2*d_{03}^2 - 2*d_{34}^2*d_{04}^2*d_{03}^2 - 2*d_{23}^2*d_{03}^2*d_{02} + 2*d_{23}^2*d_{04}^2*d_{02}^2 - d_{34}^2*d_{13}^2*d_{02}^2 - d_{13}^2*d_{02}^2 d_{24}^2 - d_{23}^2*d_{04}^2*d_{13}^2 + d_{34}^2*d_{04}^2*d_{13}^2 2*d_{04}^2*d_{02}^2*d_{24}^2 + 2*d_{03}^2*d_{02}^2*d_{24}^2 + d_{34}^2*d_{14}^2*d_{03}^2 - d_{14}^2*d_{03}^2*d_{24}^2 + d_{14}^2*d_{02}^2*d_{24}^2 + 2*d_{04}^2*d_{03}^2*d_{24}^2 - d_{34}^4*d_{01}^2 - d_{34}^2*d_{24}^2*d_{13}^2 + d_{24}^4*d_{13}^2$;

   $V_{ABCD}$ is the volume of the tetrahedron defined by reference devices A, B, C, and D as vertices, with $V_{ABCD} = 1/12*[4*(d_{12}*d_{13}*d_{14})^2 - d_{12}^2*(d_{13}^2+d_{14}^2-d_{34}^2)2 - d_{13}^2*(d_{12}^2+d_{14}^2-d_{24}^2)^2 - d_{14}^2*(d_{12}^2+d_{13}^2-d_{23}^2)^2 + (d_{12}^2+d_{13}^2-d_{23}^2)*(d_{12}^2+d_{14}^2-d_{24}^2)*(d_{13}^2+d_{14}^2-d_{34}^2)]^{1/2}$;

   $d_{ij}$ is the pairwise distance between two vertices, wherein the subscripts $i,j \in (0,..,4)$ represent the vertices (0,A, B, C, D);

$f2 = 2*(d_{34}{}^2*d_{12}{}^4 + d_{14}{}^4*d_{23}{}^2 + d_{04}{}^4*d_{23}{}^2 - 2*d_{34}{}^2*d_{01}{}^2*d_{24}{}^2 - 2*d_{01}{}^2*d_{23}{}^2*d_{24}{}^2 + d_{24}{}^2*d_{13}{}^4 + d_{34}{}^2*d_{02}{}^4 + d_{24}{}^2*d_{03}{}^4$
$- 2*d_{34}{}^2*d_{01}{}^2*d_{23}{}^2 + d_{04}{}^2*d_{13}{}^2*d_{24}{}^2 - d_{34}{}^2*d_{13}{}^2*d_{12}{}^2 - 2*d_{03}{}^2*d_{13}{}^2*d_{24}{}^2 + d_{23}{}^2*d_{14}{}^2*d_{02}{}^2 - d_{34}{}^2*d_{14}{}^2*d_{12}{}^2 +$
$d_{01}{}^2*d_{24}{}^4 + d_{01}{}^2*d_{23}{}^4 - d_{04}{}^2*d_{12}{}^2*d_{24}{}^2 - d_{13}{}^2*d_{12}{}^2*d_{24}{}^2 - 2*d_{34}{}^2*d_{02}{}^2*d_{12}{}^2 - 2*d_{04}{}^2*d_{14}{}^2*d_{23}{}^2 + d_{34}{}^2*d_{14}{}^2*d_{02}{}^2 -$
$d_{23}{}^2*d_{04}{}^2*d_{03}{}^2 + d_{03}{}^2*d_{12}{}^2*d_{24}{}^2 - d_{34}{}^2*d_{04}{}^2*d_{02}{}^2 - d_{23}{}^2*d_{13}{}^2*d_{02}{}^2 - d_{23}{}^2*d_{03}{}^2*d_{12}{}^2 + d_{34}{}^2*d_{04}{}^2*d_{12}{}^2 +$
$d_{23}{}^2*d_{04}{}^2*d_{12}{}^2 - d_{34}{}^2*d_{03}{}^2*d_{02}{}^2 + d_{34}{}^2*d_{14}{}^2*d_{13}{}^2 + d_{34}{}^2*d_{03}{}^2*d_{12}{}^2 - d_{23}{}^2*d_{14}{}^2*d_{12}{}^2 + d_{23}{}^2*d_{14}{}^2*d_{03}{}^2 +$
$d_{34}{}^2*d_{04}{}^2*d_{03}{}^2 + d_{23}{}^2*d_{03}{}^2*d_{02}{}^2 - d_{23}{}^2*d_{04}{}^2*d_{02}{}^2 - d_{14}{}^2*d_{13}{}^2*d_{24}{}^2 + d_{34}{}^2*d_{13}{}^2*d_{02}{}^2 + d_{13}{}^2*d_{02}{}^2*d_{24}{}^2 +$
$d_{23}{}^2*d_{04}{}^2*d_{13}{}^2 - d_{34}{}^2*d_{04}{}^2*d_{13}{}^2 - d_{23}{}^2*d_{14}{}^2*d_{13}{}^2 + d_{04}{}^2*d_{02}{}^2*d_{24}{}^2 + d_{14}{}^2*d_{12}{}^2*d_{24}{}^2 - d_{03}{}^2*d_{02}{}^2*d_{24}{}^2 -$
$d_{34}{}^2*d_{14}{}^2*d_{03}{}^2 + d_{14}{}^2*d_{03}{}^2*d_{24}{}^2 - d_{14}{}^2*d_{02}{}^2*d_{24}{}^2 - d_{04}{}^2*d_{03}{}^2*d_{24}{}^2 + d_{23}{}^2*d_{13}{}^2*d_{12}{}^2 + d_{34}{}^4*d_{01}{}^2);$

$V_{OBCD}$ is the volume of the tetrahedron defined by point O and reference devices B, C, and D as vertices, with

$V_{OBCD} = 1/12*[4*(d_{02}*d_{03}*d_{04})^2 - d_{02}{}^2*(d_{03}{}^2+d_{04}{}^2-d_{34}{}^2)^2 - d_{03}{}^2*(d_{02}{}^2+d_{04}{}^2-d_{24}{}^2)^2 - d_{04}{}^2*(d_{02}{}^2+d_{03}{}^2-d_{23}{}^2)^2 + (d_{02}{}^2+d_{03}{}^2-d_{23}{}^2)*(d_{02}{}^2+d_{04}{}^2-d_{24}{}^2)*(d_{03}{}^2+d_{04}{}^2-d_{34}{}^2)]^{1/2};$

$d_{0j} = d_{01} - d_{01j}$ for $2 <= j <= 4$, with $d_{01j}$ being the estimated difference in distance between point O and reference device A and point O and vertex j.

2. The method according to claim 1 **characterized in that** said at least four reference devices (A, B, C, D) generate said wireless signals, and **in that** said wireless signals are detected by a receiver device at said point (O).

3. The method according to claim 1 or 2 **characterized in that** said analytical solution according to step (c) is obtained by solving a linear equation according to the relationship $V_{OBCD}/V_{ABCD} = d_{05}/d_{15}$, wherein

$d_{15}$ is an analytical expression of the distance between said reference device A and a point x, wherein said point x is the point of intersection of a line OA with a plane BCD, wherein said line OA is the line defined by said point O and said reference device A, wherein said plane BCD is the plane defined by said reference devices B, C, and D; $d_{05}$ is an analytical expression of the distance between said point O and said point x.

4. The method according to claim 3 **characterized in that** said analytical expression of $d_{05}$ or $d_{15}$ is obtained by solving a series of linear equations based on geometry characters in a Euclidean space, wherein said analytical expression of $d_{05}$ or $d_{15}$ is further trimmed by removing a negligible partial of said analytical expression according to simulation results, wherein said simulation calculates the value of said analytical expression of $d_{05}$ or $d_{15}$ according to random locations of said point O and said reference devices A, B, C, and D.

**Patentansprüche**

1. Verfahren zum analytischen Errechnen eines Abstands ($d_{01}$) zwischen einem Punkt (O) und mindestens einem von mindestens vier Bezugsobjekten (A, B, C, D), welches Verfahren die Schritte aufweist:

(a) Ermitteln von Abständen ($d_{12}$, $d_{13}$, $d_{14}$, $d_{23}$, $d_{24}$, $d_{34}$) zwischen den mindestens vier Bezugsobjekten (A, B, C, D);

(b) Errechnen von Differenzen ($d_{0ij}$) des Abstands ($d_{0j}$) zwischen dem Punkt (O) und den mindestens vier Bezugsobjekten (A, B, C, D) durch Errechnen von Laufzeit-Differenzen drahtloser Signale zwischen dem Punkt (O) und den Bezugsobjekten (A, B, C, D); **gekennzeichnet durch**

(c) Ermitteln der analytischen Lösung für den Abstand $d_{01}$ zwischen Punkt O und Bezugsobjekt A durch Lösen einer aus der Gleichung $f_1{}^2*V_{ABCD}{}^2 - (f_1+f_2)^2*V_{OBCD}{}^2 = 0$ entwickelten biquadratischen Gleichung, wobei

$f1 = -d_{34}{}^4*d_{02} - d_{24}{}^4*d_{03}{}^2 - d_{23}{}^4*d_{04}{}^2 + d_{03}{}^2*d_{23}{}^2*d_{24}{}^2 - 2*d_{04}{}^2*d_{23}{}^2 + 2*d_{34}{}^2*d_{01}{}^2*d_{24}{}^2 + 2*d_{01}{}^2*d_{23}{}^2*d_{24}{}^2 -$
$2*d_{34}{}^2*d_{02}{}^4 - 2*d_{24}{}^2*d_{03}{}^4 \ 2*d_{34}{}^2*d_{01}{}^2*d_{23}{}^2 - d_{23}{}^2*d_{12}{}^2*d_{34}{}^2 - d_{12}{}^2*d_{34}{}^2*d_{24}{}^2 - d_{24}{}^2*d_{23}{}^2*d_{13}{}^2 + d_{12}{}^2*d_{34}{}^4 +$
$d_{14}{}^2*d_{23}{}^4 + d_{24}{}^2*d_{34}{}^2*d_{02}{}^2 + d_{24}{}^2*d_{34}{}^2*d_{03}{}^2 + d_{04}{}^2*d_{23}{}^2*d_{24}{}^2 + d_{34}{}^2*d_{02}{}^2*d_{23}{}^2 + d_{04}{}^2*d_{34}{}^2*d_{23}{}^2 - d_{24}{}^2*d_{23}{}^2*d_{14}{}^2$
$- d_{04}{}^2*d_{13}{}^2*d_{24}{}^2 + 2*d_{03}{}^2*d_{13}{}^2*d_{24}{}^2 - d_{23}{}^2*d_{14}{}^2*d_{02}{}^2 - d_{01}{}^2*d_{24}{}^4 - d_{01}{}^2*d_{23}{}^4 - d_{23}{}^2*d_{34}{}^2*d_{14}{}^2 + d_{04}{}^2*d_{12}{}^2*d_{24}{}^2 +$
$2*d_{34}{}^2*d_{02}{}^2*d_{12}{}^2 + 2*d_{04}{}^2*d_{14}{}^2*d_{23}{}^2 - d_{34}{}^2*d_{14}{}^2*d_{02}{}^2 + 2*d_{23}{}^2*d_{04}{}^2*d_{03}{}^2 - d_{03}{}^2*d_{12}{}^2*d_{24}{}^2 + 2*d_{34}{}^2*d_{04}{}^2*d_{02}{}^2 +$
$d_{23}{}^2*d_{13}{}^2*d_{02}{}^2 + d_{23}{}^2*d_{03}{}^2*d_{12}{}^2 - d_{34}{}^2*d_{04}{}^2*d_{12}{}^2 - d_{23}{}^2*d_{04}{}^2*d_{12}{}^2 + 2*d_{34}{}^2*d_{03}{}^2*d_{02}{}^2 - d_{34}{}^2*d_{03}{}^2*d_{12}{}^2 -$
$d_{23}{}^2*d_{14}{}^2*d_{03}{}^2 - 2*d_{34}{}^2*d_{04}{}^2*d_{03}{}^2 - 2*d_{23}{}^2*d_{03}{}^2*d_{02}{}^2 + 2*d_{23}{}^2*d_{04}{}^2*d_{02}{}^2 - d_{34}{}^2*d_{13}{}^2*d_{02}{}^2 - d_{13}{}^2*d_{02}{}^2*d_{24}{}^2 -$
$d_{23}{}^2*d_{04}{}^2*d_{13}{}^2 + d_{34}{}^2*d_{04}{}^2*d_{13}{}^2 - 2*d_{04}{}^2*d_{02}{}^2*d_{24}{}^2 + 2*d_{03}{}^2*d_{02}{}^2*d_{24}{}^2 + d_{34}{}^2*d_{14}{}^2*d_{03}{}^2 - d_{14}{}^2*d_{03}{}^2*d_{24}{}^2 +$
$d_{14}{}^2*d_{02}{}^2*d_{24} + 2*d_{04}{}^2*d_{03}{}^2*d_{24}{}^2 - d_{34}{}^4*d_{01}{}^2 - d_{34}{}^2*d_{24}{}^2*d_{13}{}^2 + d_{24}{}^4*d_{13}{}^2;$

$VA_{BCD}$ das Volumen des **durch** die Bezugsobjekte A, B, C und D als Spitzen definierten Tetraeders ist, wobei

$V_{ABCD} = 1/12*[4*(d_{12}*d_{13}*d_{14})^2 - d_{12}{}^2*(d_{13}{}^2+d_{14}{}^2-d_{34}{}^2)2 \ d_{13}{}^2*(d_{12}{}^2+d_{14}{}^2-d_{24}{}^2)^2 - d_{14}{}^2*(d_{12}{}^2+d_{13}{}^2-d_{23}{}^2)^2 + (d_{12}{}^2+d_{13}{}^2-d_{23}{}^2)*(d_{12}{}^2+d_{14}{}^2-d_{24}{}^2)*(d_{13}{}^2+d_{14}{}^2-d_{34}{}^2)]^{1/2};$

$d_{ij}$ der paarweise Abstand zwischen zwei Spitzen ist, wobei die Indizes $i,j \in (0,..,4)$ die Spitzen (O, A, B, C, D) repräsentieren;

$f2 = 2*(d_{34}{}^2*d_{12}{}^4 + d_{14}{}^4*d_{23}{}^2 + d_{04}{}^4*d_{23}{}^2 - 2*d_{34}{}^2*d_{01}{}^2*d_{24}{}^2 - 2*d_{01}{}^2*d_{23}{}^2*d_{24}{}^2 + d_{24}{}^2*d_{13}{}^4 + d_{34}{}^2*d_{02}{}^4 + d_{24}{}^2*d_{03}{}^4$

$- 2*d_{34}^2*d_{01}^2*d_{23}^2 + d_{04}^2*d_{13}^2*d_{24}^2 - d_{34}^2*d_{13}^2*d_{12}^2 - 2*d_{03}^2*d_{13}^2*d_{24}^2 + d_{23}^2*d_{14}^2*d_{02}^2 - d_{34}^2*d_{14}^2*d_{12}^2 + d_{01}^2*d_{24}^4 + d_{01}^2*d_{23}^4 - d_{04}^2*d_{12}^2*d_{24}^2 - d_{13}^2*d_{12}^2*d_{24}^2 - 2*d_{34}^2*d_{02}^2*d1_2^2 - 2*d_{04}^2*d_{14}^2*d_{23}^2 \; d_{34}^2*d_{14}^2*d_{02}^2 - d_{23}^2*d_{04}^2*d_{03}^2 + d_{03}^2*d_{12}^2*d_{24}^2 - d_{34}^2*d_{04}^2*d_{02}^2 - d_{23}^2*d_{13}^2*d_{02}^2 - d_{23}^2*d_{03}^2*d_{12}^2 + d_{34}^2*d_{04}^2*d_{12}^2 + d_{23}^2*d_{04}^2*d_{12}^2 - d_{34}^2*d_{03}^2*d_{02}^2 + d_{34}^2*d_{14}^2*d_{13}^2 + d_{34}^2*d_{03}^2*d_{12}^2 - d_{23}^2*d_{14}^2*d_{12}^2 + d_{23}^2*d_{14}^2*d_{03}^2 + d_{34}^2*d_{04}^2*d_{03}^2 + d_{23}^2*d_{03}^2*d_{02}^2 - d_{23}^2*d_{04}^2*d_{02}^2 - d_{14}^2*d_{13}^2*d_{24}^2 + d_{34}^2*d_{13}^2*d_{02}^2 + d_{13}^2*d_{02}^2*d_{24}^2 + d_{23}^2*d_{04}^2*d_{13}^2 - d_{34}^2*d_{04}^2*d_{13}^2 - d_{23}^2*d_{14}^2*d_{13}^2 + d_{04}^2*d_{02}^2*d_{24} + d_{14}^2*d_{12}^2*d_{24}^2 - d_{03}^2*d_{02}^2*d_{24}^2 - d_{34}^2*d_{14}^2*d_{03}^2 + d_{14}^2*d_{03}^2*d_{24}^2 - d_{14}^2*d_{02}^2*d_{24}^2 - d_{04}^2*d_{03}^2*d_{24}^2 + d_{23}^2*d_{13}^2*d_{12}^2 + d_{34}^4*d_{01}^2);$

$V_{OBCD}$ das Volumen des **durch** Punkt O und die Bezugsobjekte B, C und D als Spitzen definierten Tetraeders ist, wobei $V_{OBCD} = 1/12*[4*(d_{02}*d_{03}*d_{04})^2 - d_{02}^2*(d_{03}^2+d_{04}^2-d_{34}^2)^2 - d_{03}^2*(d_{02}^2+d_{04}^2-d_{24}^2)^2 - d_{04}^2*(d_{02}^2+d_{03}^2-d_{23}^2)^2 + (d_{02}^2+d_{03}^2-d_{23}^2)*(d_{02}^2+d_{04}^2-d_{24}^2)*(d_{03}^2+d_{04}^2-d_{34}^2)]^{1/2}$;

$d_{0j} = d_{01} - d_{01j}$ für $2 <= j <= 4$, wobei $d_{01j}$ die errechnete Differenz des Abstands zwischen Punkt O und Bezugsobjekt A und Punkt O und Spitze j ist.

2. Verfahren gemäß Anspruch 1, **dadurch gekennzeichnet, dass** die mindestens vier Bezugsobjekte (A, B, C, D) die drahtlosen Signale erzeugen und dass die drahtlosen Signale von einem Empfänger am Punkt (O) erfasst werden.

3. Verfahren gemäß Anspruch 1 oder 2, **dadurch gekennzeichnet, dass** die analytische Lösung gemäß Schritt (c) durch Lösen einer linearen Gleichung gemäß der Beziehung $V_{OBCD}/V_{ABCD} = d_{05}/d_{15}$ ermittelt wird, wobei
$d_{15}$ ein analytischer Ausdruck für den Abstand zwischen dem Bezugsobjekt A und einem Punkt x ist, wobei der Punkt x der Schnittpunkt einer Linie OA mit einer Ebene BCD ist, wobei die Linie OA die durch den Punkt O und das Bezugsobjekt A definierte Linie ist, wobei die Ebene BCD die durch die Bezugsobjekte B, C und D definierte Ebene ist;
$d_{05}$ ein analytischer Ausdruck für den Abstand zwischen dem Punkt O und dem Punkt x ist.

4. Verfahren gemäß Anspruch 3, **dadurch gekennzeichnet, dass** der analytische Ausdruck für $d_{05}$ oder $d_{15}$ durch Lösen einer Reihe linearer Gleichungen auf Basis geometrischer Zeichen in einem euklidischen Raum ermittelt wird, wobei der analytische Ausdruck für $d_{05}$ oder $d_{15}$ durch Weglassen eines gemäß Simulationsergebnissen vernachlässigbaren Teils des analytischen Ausdrucks weiter abgekürzt wird, wobei die Simulation den Wert des analytischen Ausdrucks für $d_{05}$ oder $d_{15}$ gemäß Zufallsortsbestimmung des Punkts O und der Bezugsobjekte A, B, C, und D berechnet.

**Revendications**

1. Procédé pour estimer de manière analytique une distance ($d_{01}$) entre un point (O) et au moins l'un parmi au moins quatre dispositifs de référence (A, B, C, D) comprenant les étapes suivantes:

   (a) obtenir des distances ($d_{12}$, $d_{13}$, $d_{14}$, $d_{23}$, $d_{24}$, $d_{34}$) entre lesdits au moins quatre dispositifs de référence (A, B, C, D);

   (b) estimer des différences ($d_{0ij}$) de distance ($d_{0j}$) entre ledit point (O) et lesdits au moins quatre dispositifs de référence (A, B, C, D) en estimant des différences de temps de parcours de signaux sans fil entre ledit point (O) et lesdits dispositifs de référence (A, B, C, D);
   **caractérisé par**
   (c) l'obtention de la solution analytique pour la distance $d_{01}$ entre le point O et le dispositif de référence A grâce à la résolution d'une équation quartique développée à partir de l'équation $f_1^2*V_{ABCD}^2-(f_1+f_2)^2*V_{OBCD}^2 = 0$, dans lequel
   $f_1 = -d_{34}^4*d_{02}^2 - d_{24}^4*d_{03}^2 - d_{23}^4*d_{04}^2 + d_{03}^2*d_{23}^2*d_{24}^2 - 2*d_{04}^4*d_{23}^2 + 2*d_{34}^2*d_{01}^2*d_{24}^2 + 2*d_{01}^2*d_{23}^2*d_{24}^2 - 2*d_{34}^2*d_{02}^4 - 2*d_{24}^2*d_{03}^4 + 2*d_{34}^2*d_{01}^2*d_{23}^2 - d_{23}^2*d_{12}^2*d_{34}^2 - d_{12}^2*d_{34}^2*d_{24}^2 - d_{24}^2*d_{23}^2*d_{13}^2+d_{12}^2*d_{34}^4 + d_{14}^2*d_{23}^4 + d_{24}^2*d_{34}^2*d_{02}^2 + d_{24}^2*d_{34}^2*d_{03}^2 + d_{04}^2*d_{23}^2*d_{24}^2 + d_{34}^2*d_{02}^2*d_{23}^2 + d_{04}^2*d_{34}^2*d_{23}^2 - d_{24}^2*d_{23}^2*d_{14}^2 - d_{04}^2*d_{13}^2*d_{24}^2 + 2*d_{03}^2*d_{13}^2*d_{24}^2 - d_{23}^2*d_{14}^2*d_{02}^2 - d_{01}^2*d_{24}^4 - d_{01}^2*d_{23}^4 - d_{23}^2*d_{34}^2*d_{14}^2 + d_{04}^2*d_{12}^2*d_{24}^2 + 2*d_{34}^2*d_{02}^2*d_{12}^2 + 2*d_{04}^2*d_{14}^2*d_{23}^2 - d_{34}^2*d_{14}^2*d_{02}^2 + 2*d_{23}^2*d_{04}^2*d_{03}^2 - d_{03}^2*d_{12}^2*d_{24}^2 + 2*d_{34}^2*d_{04}^2*d_{02}^2 + d_{23}^2*d_{13}^2*d_{02}^2 + d_{23}^2*d_{03}^2*d_{12}^2 - d_{34}^2*d_{04}^2*d_{12}^2 - d_{23}^2*d_{04}^2*d_{12}^2 + 2*d_{34}^2*d_{03}^2*d_{02}^2 - d_{34}^2*d_{03}^2*d_{12}^2 - d_{23}^2*d_{12}^4*d_{03}^2 - 2*d_{34}^2*d_{04}^2*d_{03}^2 - 2*d_{23}^2*d_{03}^2*d_{02}^2 + 2*d_{23}^2*d_{04}^2*d_{02}^2 - d_{34}^2*d_{13}^2*d_{02}^2 - d_{13}^2*d_{02}^2*d_{24}^2 - d_{23}^2*d_{04}^2*d_{13}^2 + d_{34}^2*d_{04}^2*d_{13}^2 - 2*d_{04}^2*d_{02}^2*d_{24}^2 + 2*d_{03}^2*d_{02}^2*d_{24}^2 + d_{34}^2*d_{14}^2*d_{03}^2 - d_{14}^2*d_{03}^2*d_{24}^2 + d_{14}^2*d_{02}^2*d_{24}^2 + 2*d_{04}^2*d_{03}^2*d_{24}^2 - d_{34}^4*d_{01}^2 - d_{34}^2*d_{24}^2*d_{13}^2 + d_{24}^4*d_{13}^2$;
   $V_{ABCD}$ est le volume du tétraèdre défini par les dispositifs de référence A, B, C et D en tant que sommets, avec $V_{ABCD} = 1/12*[4*(d_{12}*d_{13}*d_{14})^2 - d_{12}^2*(d_{13}^2+d_{14}^2-d_{34}^2)2 - d_{13}^2*(d_{12}^2+d_{14}^2-d_{24}^2)^2 - d_{14}^2*(d_{12}^2+d_{13}^2-d_{23}^2)^2 + (d_{12}^2+d_{13}^2-d_{23}^2)*(d_{12}^2+d_{14}^2-d_{24}^2)*(d_{13}^2+d_{14}^2-d_{34}^2)]^{1/2}$;

$d_{ij}$ est la distance par paires entre deux sommets, les indices i, j $\in$ (0,..., 4) représentant les sommets (O, A, B, C, D);

$f_2 = 2*(d_{34}^2*d_{12}^4 + d_{14}^4*d_{23}^2 + d_{04}^4*d_{23}^2 - 2*d_{34}^2*d_{01}^2*d_{24}^2 - 2*d_{01}^2*d_{23}^2*d_{24}^2 + d_{24}^2*d_{13}^4 + d_{34}^2*d_{02}^4 + d_{24}^2*d_{03}^4 - 2*d_{34}^2*d_{01}^2*d_{23}^2 + d_{04}^2*d_{13}^2*d_{24}^2 - d_{34}^2*d_{13}^2*d_{12}^2 - 2*d_{03}^2*d_{13}^2*d_{24}^2 + d_{23}^2*d_{14}^2*d_{02}^2 - d_{34}^2*d_{14}^2*d_{12}^2 + d_{01}^2*d_{24}^4 + d_{01}^2*d_{23}^4 - d_{04}^2*d_{12}^2*d_{24}^2 - d_{13}^2*d_{12}^2*d_{24}^2 - 2*d_{34}^2*d_{02}^2*d_{12}^2 - 2*d_{04}^2*d_{14}^2*d23^2 + d_{34}^2*d_{142}^2*d_{02}^2 - d_{23}^2*d_{04}^2*d_{03}^2 + d_{03}^2*d_{12}^2*d_{24}^2 - d_{34}^2*d_{04}^2*d_{02}^2 - d_{23}^2*d_{13}^2*d_{02}^2 - d_{23}^2*d_{03}^2*d_{12}^2 + d_{34}^2*d_{04}^2*d_{12}^2 + d_{23}^2*d_{04}^2*d_{12}^2 - d_{34}^2*d_{03}^2*d_{02}^2 + d_{34}^2*d_{14}^2*d_{13}^2 + d_{34}^2*d_{03}^2*d_{12}^2 - d_{23}^2*d_{14}^2*d_{12}^2 + d_{23}^2*d_{14}^2*d_{03}^2 + d_{34}^2*d_{04}^2*d_{03}^2 + d_{23}^2*d_{03}^2*d_{02}^2 - d_{23}^2*d_{04}^2*d_{02}^2 - d_{14}^2*d_{13}^2*d_{24}^2 + d_{34}^2*d_{13}^2*d_{02}^2 + d_{13}^2*d_{02}^2*d_{24}^2 + d_{23}^2*d_{04}^2*d_{13}^2 - d_{34}^2*d_{04}^2*d_{13}^2 - d_{23}^2*d_{14}^2*d_{13}^2 + d_{04}^2*d_{02}^2*d_{24}^2 + d_{14}^2*d_{12}^2*d_{24} - d_{03}^2*d_{02}^2*d_{24}^2 - d_{34}^2*d_{14}^2*d_{03}^2 + d_{14}^2*d_{03}^2*d_{24}^2 - d_{14}^2*d_{02}^2*d_{24}^2 - d_{04}^2*d_{03}^2*d_{24}^2 + d_{23}^2*d_{13}^2*d_{12}^2 + d_{34}^4*d_{01}^2)$;

$V_{OBCD}$ est le volume du tétraèdre défini par le point O et les dispositifs de référence B, C et D en tant que sommets, avec $V_{OBCD} = 1/12*[4*(d_{02}*d_{03}*d_{04})^2 - d_{02}*(d_{03}^2+d_{04}^2-d_{34}^2)^2 - d_{03}^2*(d_{02}^2+d_{04}^2-d_{24}^2)_2 - d_{04}^2*(d_{02}^2+d_{03}^2-d_{23}^2)^2 + (d_{02}^2+d_{03}^2-d_{23}^2)*(d_{02}^2+d_{04}^2-d_{24}^2)*(d_{03}^2+d_{04}^2-d_{34}^2)]^{1/2}$;

$d_{0j} = d_{01} - d_{01j}$ pour 2 <= j <= 4, avec $d_{01j}$ en tant que différence de distance estimée entre le point O et le dispositif de référence A et le point O et le sommet j.

**2.** Procédé selon la revendication 1, **caractérisé en ce que** lesdits au moins quatre dispositifs de référence (A, B, C, D) génèrent lesdits signaux sans fil, et **en ce que** lesdits signaux sans fil sont détectés par un dispositif de réception au dit point (O).

**3.** Procédé selon la revendication 1 ou 2, **caractérisé en ce que** ladite solution analytique selon l'étape (c) est obtenue grâce à la résolution d'une équation linéaire selon le rapport $V_{OBCD}/V_{ABCD}=d_{05}/d_{15}$, où

$d_{15}$ est une expression analytique de la distance entre ledit dispositif de référence A et un point x, ledit point x étant le point d'intersection d'une ligne OA avec un plan BCD, ladite ligne OA étant la ligne définie par ledit point O et ledit dispositif de référence A, ledit plan BCD étant le plan défini par lesdits dispositifs de référence B, C, et D;

$d_{05}$ est une expression analytique de la distance entre ledit point O et ledit point x.

**4.** Procédé selon la revendication 3, **caractérisé en ce que** ladite expression analytique de $d_{05}$ ou $d_{15}$ est obtenue grâce à la résolution d'une série d'équations linéaires sur la base de caractères de géométrie dans un espace euclidien, dans lequel ladite expression analytique de $d_{05}$ ou $d_{15}$ est en outre réduite en enlevant une part négligeable de ladite expression analytique en fonction de résultats de simulation, ladite simulation calculant la valeur de ladite expression analytique de $d_{05}$ ou $d_{15}$ en fonction d'emplacements aléatoires dudit point O et desdits dispositifs de référence A, B, C et D.

Figure 1.

Figure 2.

**Figure 3.**

**Figure 4.**

**Figure 5.**

**Figure 6.**

**REFERENCES CITED IN THE DESCRIPTION**

**Patent documents cited in the description**

- EP 1014103 A2

**Non-patent literature cited in the description**

- **AWANGE, J. L. ; E. GRAFAREND.** Algebraic solution of GPS pseudo-ranging equations. *Journal of GPS Solutions,* 2002, vol. 4 (5), 20-32
- **J. ROTMAN.** Galois Theory. Springer-Verlag, 1990
- **JULIUS O. SMITH ; JONATHAN S. ABEL.** Closed-Form Least-Squares Source Location Estimation from Range-Difference Measurements. *IEEE Transactions on Acoustics, Speech, and Signal Processing,* December 1987, vol. ASSP-35 (12), 1661-1669
- **K. C. HO ; Y. T. CHAN.** Solution and Performance Analysis of Geolocation by TDOA. *IEEE Transactions on Aerospace and Electronic Systems,* 01 October 1993, vol. 29 (4), 1311-1322
- **B. T. FANG.** Simple solutions for hyperbolic and related position fixes. *IEEE Transactions on Aerospace and Electronic Systems,* 01 September 1990, vol. 26 (5), 748-753